Europäisches Patentamt

European Patent Office

Office européen des brevets

(19)

(11) **EP 1 302 868 A2**

(12) **EUROPEAN PATENT APPLICATION**

(43) Date of publication:
**16.04.2003 Bulletin 2003/16**

(51) Int Cl.⁷: **G06F 17/30**

(21) Application number: **02251263.6**

(22) Date of filing: **25.02.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **12.10.2001 JP 2001314993**

(71) Applicant: **FUJITSU LIMITED
Kawasaki-shi, Kanagawa 211-8588 (JP)**

(72) Inventor: **Tsuda, Hiroshi, c/o Fujitsu Limited
Kawasaki-shi, Kanagawa 211-8588 (JP)**

(74) Representative: **Stebbing, Timothy Charles et al
Haseltine Lake & Co.,
Imperial House,
15-19 Kingsway
London WC2B 6UD (GB)**

(54) **Document sorting method based on link relation**

(57)     A document sorting device (10)comprises a popularity degree calculation unit (11) and a popularity degree transition calculation unit (12). The popularity degree calculation unit (11) calculates a popularity degree indicating the usefulness of or demand for each document, based on a link relation between documents in a network that are collected during a first time period. The popularity degree transition calculation unit (12) calculates a popularity transition degree indicating both a direction and a degree of time changes in the popularity degree, based on the popularity degree calculated by the popularity degree calculation unit (11) during a second time period. In this way, a problem that the popularity degree always increases and never decreases can be solved and, simultaneously, information indicating how the popularity of a document changes as time elapses can be obtained. The device can be used to sort documents searched for on the World Wide Web.

DOCUMENT SORTING APPARATUS 10

LINK RELATION AND TAG

| POPULARITY DEGREE CALCULATION UNIT (11) | RELATED NON-TEXT CONTENTS JUDGMENT UNIT (13) | SERVICE TYPE JUDGMENT UNIT (14) |

POPULARITY DEGREE TRANSITION CALCULATION UNIT (12)

F I G.  1

EP 1 302 868 A2

**Description**

The present invention relates to the sorting of documents existing in a network and in particular, it relates to a document sorting method suitable for a case where there are a lot of documents in a variety of formats, such as a character format, an image format, a voice format and the like and where such documents are frequently updated. The present invention further relates to sorting of documents based on their "popularity", e.g. usefulness or connectedness as indicated by their degree of linkage to other documents.

The WWW (World Wide Web)(hereinafter called "Web") is one of the rapidly growing Internet resources. The Web stores a lot of documents (also called "Web pages"), the number of pages amounting to two billion or more in the year 2000, according to a certain survey. The Web not only stores a lot of documents, but also the documents are updated very frequently.

According to the survey made by the Web Archive Organization, on the Web, information increases by 10% monthly and the average life of one document (from when a document is prepared until when the document ceases to be managed) is approximately 75 days.

Currently, several retrieval services for searching for information existing on the Web are provided. In such a retrieval service, a retriever is provided with both information indicating the location in the network of a document obtained by such retrieval, such as a URI (Uniform Resource Identifier), a URL (Uniform Resource Locator) and the like, and a sentence showing the contents of a Web page.

Recently, reflecting the age of broadband, the contents of a document have shifted from text to animation/voice and the like, and also shifted from a document for simply browsing to a document for providing a service.

To make retrieval results more relevant, it is helpful to emphasise documents most likely to be useful to, or demanded by, a user. One way to do this is to assess the "popularity" of documents on the Web. However, since a conventional retrieval service provides services based on the situation of the Web at a specific point in time, how the popularity of a document changes as time elapses is unknown. For example, whether the document is becoming popular, is already stable in terms of popularity or is outdated is unknown, which is a problem. For example, on the Web there is no way to determine the popular Web pages (e.g. those most accessed or in demand) in a given period.

On the Web, an author seldom deletes old documents and seldom frequently modifies the contents of a document. Therefore, when the "popularity degree" of a document, which indicates the popularity of the document, is calculated based on the number of other documents simply linked to the document (number of linked documents), the popularity degree of a document seldom decreases, which is also a problem.

Recently, reflecting the age of broadband, the main contents of a document have shifted from text to non-text, such as images, etc., and contents including a service. However, there is no document sorting method to cope with such a change.

The present invention addresses a problem that the popularity degree based on the number of linked documents of a document always increases and never decreases. An embodiment of the present invention can obtain information indicating how the "popularity degree" of a document, as determined for example by the number of links to the document from other documents located on the Web, changes as time passes. An embodiment of the present invention can sort documents in relation to the transition (change with time) of document contents and the like.

According to one aspect of the present invention, a popularity degree calculation method for calculating the popularity degree of a document indicating the level of popularity of a document in a network, includes: extracting documents updated or collected (e.g., added to the network or first identified) during a first time period and calculating the popularity degree of each of the extracted documents.

By calculating the popularity degree of each of the documents collected or updated during the first time period, old documents (e.g., documents placed on the network a long time ago and not since updated) are eliminated from the targets of popularity calculation. Thus, the problem that the popularity degree of a document tends to increase and never decrease can also be solved. In order to calculate a meaningful popularity degree, it is preferable for the first time period to be fairly long, for example, approximately 150 days.

Alternatively, the popularity degree can be calculated based on both a link relation (e.g. number of links to or from the document) extracted from each document and document location information indicating the location of a document in a network. In this case, since there is no need to read the contents of a document, a popularity degree can be rapidly calculated.

The method described above can also calculate a popularity transition degree indicating both the direction (more or less popular over time) and degree of the transition of the popularity degree of a document, based on a popularity degree calculated during a second time period. In this way, information indicating how the popularity degree of a document changes in a time series can be obtained.

Since the second time period is used to check the variation of popularity over time, it is preferable for this time period to be not so long, for example, several weeks.

The method described above can also calculate a regression equation against time of the popularity degree calculated in the second time period and then calculate a popularity transition degree, based on the regression equation. In this case, the popularity transition degree (rate of popularity rise or fall) can be determined based on the regression coefficient of the regression equation or the tendency of the transition against time of a popularity degree can be determined based on an intercept of the regression equation.

When the regression equation is calculated, the popularity degree order (e.g. popularity rank) of the extracted document can also be used instead of the popularity degree.

According to another aspect of the present invention, a document relationship judgment method for judging the relationship between documents in a network comprises: extracting a link relation from a first document and judging whether a second document linked to the first document is a non-text document related to the contents (content) of the first, based on the link relation. In this way, non-text documents that have recently been increasing in number can be sorted according to the types of non-text media.

The method described above can further comprise: extracting a character string in the vicinity of a part which links to the second document in the first document, from the first document and judging whether the second document is a non-text document related to the contents of the first document, based on the character string. For example, if a character string shows that the second document has a non-text format, such as MPEG, animation, streaming and the like, it can be estimated that the second document will be a non-text document related to the contents of the first document.

If an extension is not a specific one, the method described above can further comprise judging that the second document is not a non-text document related to the contents of the first document. Since an extension indicates the document format of the second document, it can be judged whether the second document is a non-text document, based on the extension.

The method described above can further comprise judging whether the second document is a non-text document related to the contents of the first document, based on whether the second document is used a prescribed number of times or more in the first document. For example, a bullet and the like are images, and such element images for preparing a document are repeatedly used many times and are not related to the contents of the document. Therefore, if the second document is frequently used in the first document, it can be estimated that the second document is not related to the contents of the first document.

If there is a third document with a file name similar to that of the second document in the first document and if the file name of the second document is ranked higher than that of the third document in a dictionary order, the method described above can further comprise registering the second document as a non-text document related to the contents of the first document.

For example, if the first document is a collection of photographs, the document includes a lot of images. If all the images are registered as non-text documents related to the contents of the first document, there is a possibility that the situation may become problematic. However, since in this case, the file names of these image files tend to be similar to one another, registering only a document, the file name which is ranked at the top in a dictionary order, of a plurality of documents, as a non-text document related to the contents of the first document, can solve such a problem.

If there is a fourth document linked to the second document, the method described above can further comprise judging whether the second document is a non-text document related to the contents of the first document, based on both the document location information indicating the location of the first document in a network and the document location information about the second document. In addition, the method can further comprise judging whether the second document is a non-text document related to the contents of the first document, based on both the document location information about the first document and that of the fourth document.

For example, the first document sometimes includes the second document as a non-text document unrelated to the contents, such as a banner advertisement and the like. In such a case, both the document location information about the second document and that of the fourth document, which is the link destination of the second document, seldom have the same server address or domain as that of the document location information about the first document. Therefore, a non-text document unrelated to the contents of the first document, such as an advertisement banner, can be eliminated based on the document location information about each document.

According to another aspect of the present invention, a service type judgment method for judging the type of a service provided by a document in a network comprises: extracting a tag designating user input from a document and judging the type of service provided by the document, based on the tag designating user input. In this way, each of the documents can be sorted according to the service type provided by the document. For a tag designating user input, for example, a form tag is used if a language describing a document is HTML.

The method described above can further comprise determining that the document does not provide any services if the document includes no tag designating user input. This is because if a document includes no user input column, there will be a low possibility that the document may provide a service.

The method can further comprise judging the type of a service provided by the document, based on button indication included in the document. In addition, the method can judge the type of a service provided by a document, based on an input column in addition to the button indication. This is because the format of the input column of a button and the like is often determined based on a service provided by a document.

More specifically, for example, if a document includes a button indicating the purchase of goods, the method can further comprise judging that a service type provided by a document is "sales agent". A document providing a service of selling goods often includes such a button so as to receive the order of goods.

For example, if a document includes both a user input area and a button indicating retrieval, the method can also judge the service type provided by the document is "retrieval".

A device provided with means for implementing the procedure performed by the method according to each aspect of the present invention can also obtain the same functions/effects as those of the method described earlier. The same functions/effects as those of the method described earlier can also be obtained by a computer executing a program for enabling the computer to exercise the same control as the procedure performed by each of the methods described above of the present invention. The same functions/effects as those of the method described earlier, as described above, of a computer browsing and executing the program can also be obtained from a computer-readable storage medium that stores the program.

The features and advantages of the present invention will be more clearly appreciated from the following description taken in conjunction with the accompanying drawings in which like elements are denoted by like reference numbers and in which:

Fig. 1 shows the basic configuration of the present invention;
Fig. 2 shows the configuration of a document retrieval device according to the present invention;
Fig. 3 shows an example of the data structure of a document table;
Fig. 4 shows an example of the data structure of a link relation table;
Fig. 5 shows an example of the data structure of a popularity degree table;
Fig. 6 shows an example of the data structure of a popularity degree transition table;
Fig. 7 shows an example of the data structure of a non-text contents table;
Fig. 8 shows an example of the data structure of a service type table;
Fig. 9 is a flowchart showing the procedure of processes for calculating a popularity degree;
Fig. 10A shows the transition of a popularity degree calculated by a conventional calculation method;
Fig. 10B shows the transition of a popularity degree calculated by a calculation method according to the preferred embodiment;
Fig. 10C shows the transition of a popularity degree ranking based on a popularity degree calculated by a calculation method according to the preferred embodiment;
Fig. 11 is a flowchart showing the procedure of processes for calculating a popularity degree;
Fig. 12 is a flowchart showing the procedure of processes for judging related non-text contents;
Fig. 13 is a flowchart showing the procedure of processes for judging a provided service;
Fig. 14 shows an example of the display screen of a retrieval result;
Fig. 15A shows an example of a popularity degree transition screen;
Fig. 15B shows an example of a screen displaying a list of documents having a specific document as the link destination;
Fig. 16A shows an example of a popularity degree list;
Fig. 16B shows an example of a graph showing the transition of the popularity degree of each of the documents included in the popularity degree list for the past year;
Fig. 17A shows an example of a screen displaying a list of documents relating to a category "Tokyo";
Fig. 17B shows an example of a screen displaying a list of documents relating to a category "Minato-ku (ward), Tokyo";

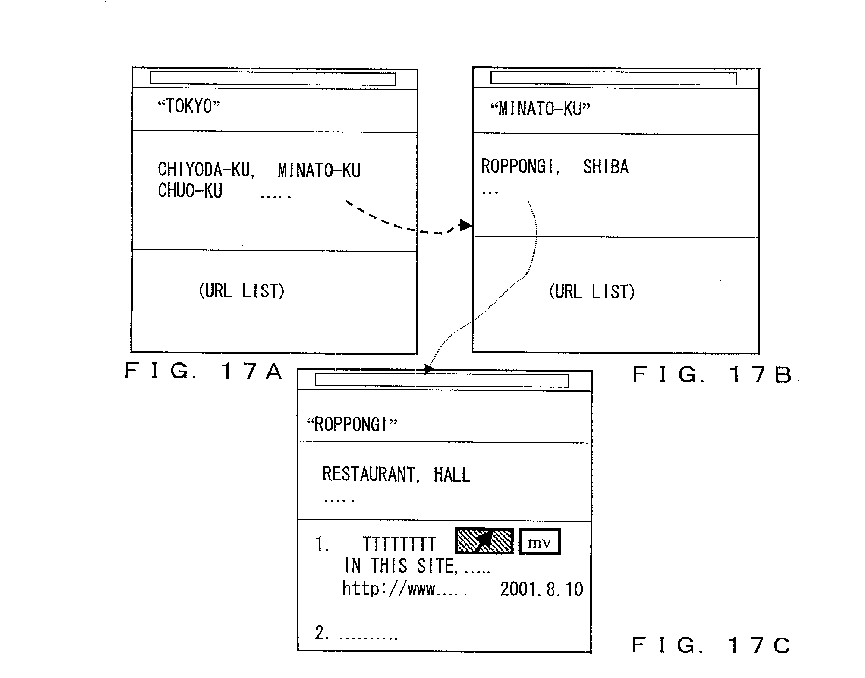

Fig.17 shows an example of a screen displaying a list of documents relating to a category "Roppongi, Minato-ku (ward), Tokyo";

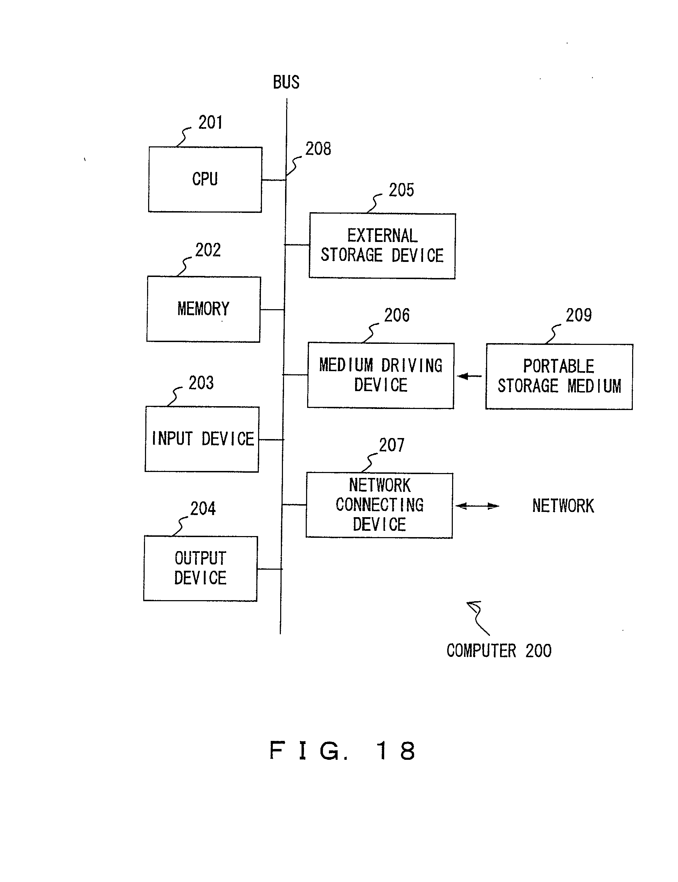

Fig. 18 shows the configuration of a computer; and

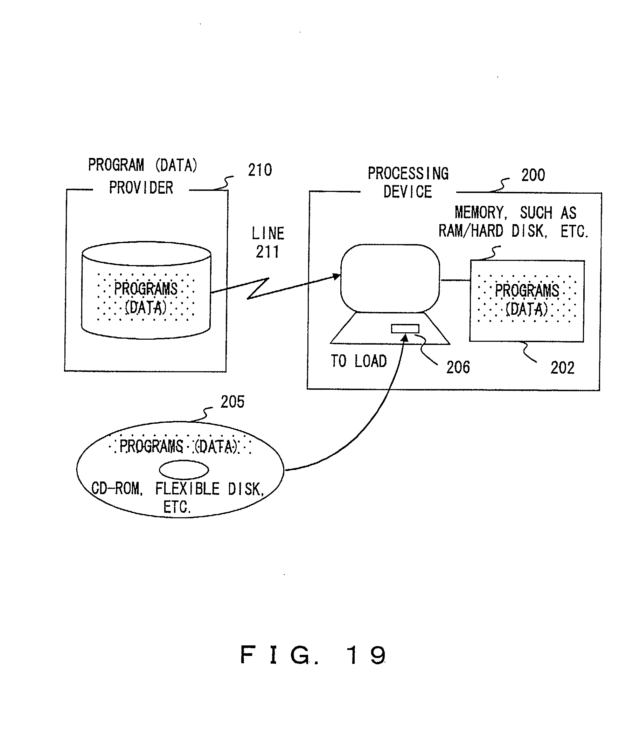

Fig. 19 shows storage media and transmission signals that provide a computer with both a program and data.

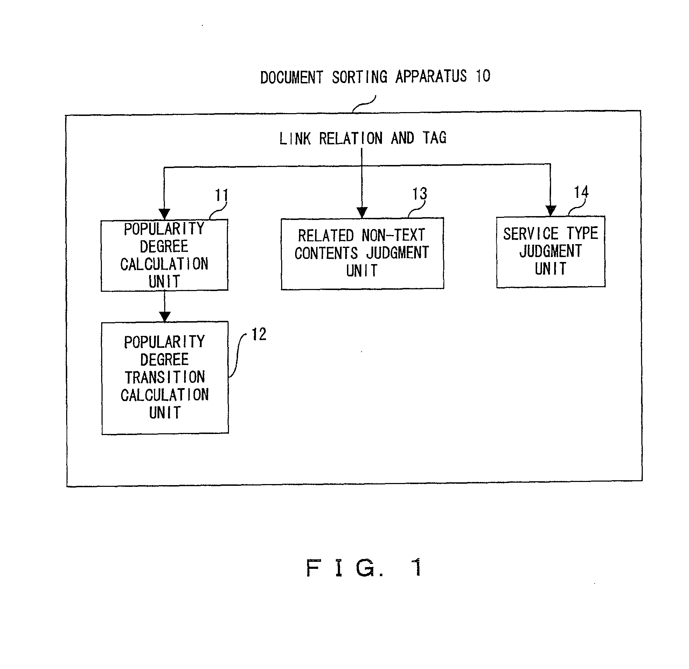

The preferred embodiments of the present invention are described below with reference to the drawings. Fig. 1 shows the basic configuration of the present invention. A document sorting device according to the present invention calculates a popularity degree indicating the degree of the popularity of a document, based on a link relation and further calculates a popularity transition degree indicating how the popularity degree varies with time. Then, each document is sorted according to both the calculated popularity degree and popularity transition degree.

As shown in Fig. 1, a document sorting device 10 comprises a popularity degree calculation unit 11 and a popularity degree transition calculation unit 12. The popularity calculation unit 11 calculates a popularity degree indicating the degree of popularity of each document, based on the link relation between documents in a network that are collected during the first time period. In this case, the popularity degree calculation unit 11 calculates the popularity degree of each of the documents collected or updated during the first time period. In this way, the problem that the popularity degree of a document will always increase and never decrease can be solved.

The popularity degree transition calculation unit 12 calculates a popularity transition degree indicating the direction and degree of a transition of popularity degree during the second time period, based on the popularity degree calculated by the popularity degree calculation unit 11. The popularity degree transition calculation unit 12 can use a popularity degree order obtained by ranking each document according to the popularity degree instead of the popularity degree. In this way, how the popularity of a document in a network varies as time elapses can be analyzed.

Recently, reflecting the age of broadband Internet, the contents of a document have shifted from text to non-text, such as images, animation, voice and the like, and the emphasis has also been shifting from a document for simple browsing to a document for providing services, such as retrieval, registration and the like. However, for example, in the conventional retrieval service, as a retrieval result, a retriever is provided with both information indicating the location of a retrieved document in a network and an explanatory sentence indicating the contents of the document. Therefore, the retriever cannot judge what non-text contents the document includes or what service the document provides without accessing the document.

When sorting such non-text contents, if non-text contents in the document are judged simply based on the extension of a file, non-text contents unrelated to the contents of the document, such as a banner, a bullet (point) and the like are also sorted as contents related to the document, which is another problem.

Therefore, as shown in Fig. 1, the document sorting device 10 according to the present invention further comprises a related non-text contents judgment unit 13 and a service type judgment unit 14. The related non-text contents judgment unit 13 selects non-text contents related to the contents of the document from all the non-text contents included in each document and sorts the selected non-text contents related to the contents of the document in relation to the document.

The service type judgment unit 14 judges whether a document provides a service, based on a tag included in each document, for example, a tag designating user input used when providing an input column, such as a form tag in the case of HTML and the like. If the document provides a service, the unit 14 further judges the type of the service and sorts the judged service type in relation to the document. In this way, for example, in a retrieval service, as a result, both non-text contents related to the document and information about the service provided by the document can be provided as information about the document in addition to both the information indicating the location of a document in a network and a sentence indicating the contents of the document.

The preferred embodiments of the present invention are described below. Although a case where the document sorting device described above is applied to a document retrieval apparatus for retrieving a document from a network is described, the application scope of the present invention is not limited to this apparatus.

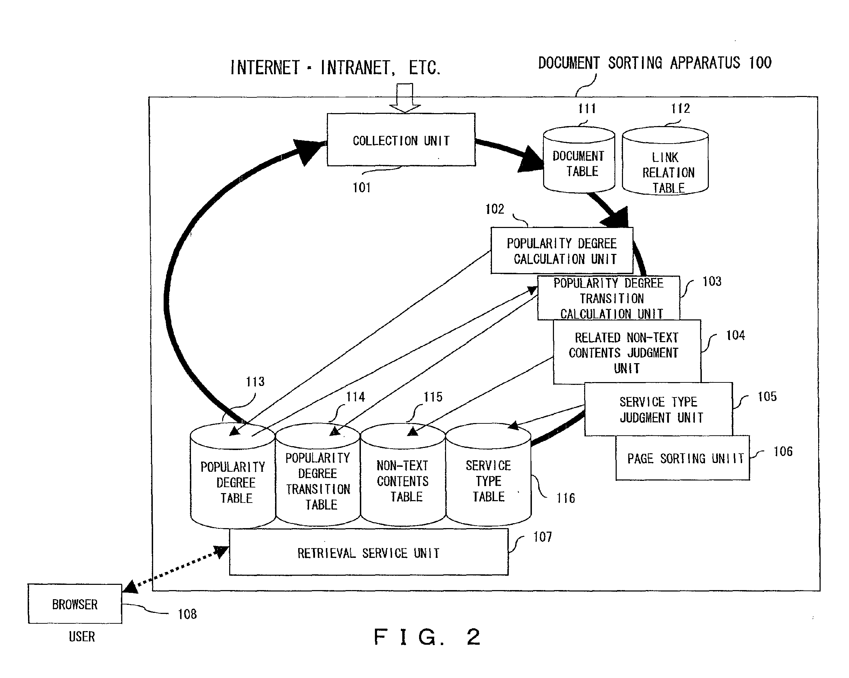

Fig. 2 shows the configuration of a document retrieval apparatus according to the preferred embodiment of the present invention. A document retrieval apparatus 100 collects documents from a network and sorts the collected documents. For the network, a LAN (Local Area Network) , such as an intra-net, a dedicated line and the like, and a WAN (Wide Area Network), such as a public line, the Internet and the like, are used. The document retrieval apparatus 100 searches for documents directly or according to the instructions of the user of a terminal set, which is not shown in Fig. 2, connected to the apparatus 100 through a network, which is not shown in Fig. 2, and provides the retrieval result to the user.

If the document retrieval apparatus 100 is used as a server for providing terminal sets with services or data through a network, the terminal set of the user can also comprise a browser 108, and the user can also browse information transmitted from the document retrieval apparatus 100 using the browser 108.

As shown in Fig. 2, the document retrieval apparatus 100 comprises a collection unit 101, a popularity degree calculation unit 102, a popularity degree transition calculation unit 103, a related non-text contents judgment unit 104, a service type judgment unit 105, a page sorting unit 106, a retrieval service unit 107, a document table 111, a link relation table 112, a popularity degree table 113, a popularity degree transition table 114, a non-text contents table 115 and a service type table 116. Each of the collection unit 101, popularity degree calculation unit 102, popularity degree transition calculation unit 103, related non-text contents judgment unit 104, service type judgment unit 105, page sorting unit 106 and retrieval service unit 107, for example, corresponds to each software component described by a program and is stored in the specific program code intercept of the memory in the computer for implementing the document retrieval apparatus 100.

For a language for describing documents in a network, that is, Web pages, for example, a language for embedding a link relation into a document, such as HTML (HyperText Markup Language), XML (eXtensible Markup Language), SGML (Standard Generalized Markup Language) and the like, are used. The present invention handles images, animation, voice and the like as documents in addition to text documents described with the languages described above. Although in the following description, HTML is sometimes used as a language for describing a text document, the present invention is not limited to HTML.

The collection unit 101 collects documents made public in a network and attaches a document ID (Identification information) for identifying a document to each of the collected documents. The collection unit 101 also analyzes the link relation between the collected documents. Furthermore, the collection unit 101 stores the document location information indicating the location of the collected document in the network and information about the link relation between the collected documents in the document table 111 and link relation table 112, respectively.

For the document location information, for example, a URI (Uniform Resource Identifier) and the like are used. A URI is a comprehensive idea, and for the URI, currently, a URL (Uniform Resource Locator) using a part of the specific functions of the URI is widely used. In the following description, a URL sometimes is used as the document location information. However, the present invention is not limited to the URL.

The popularity degree calculation unit 102 regularly (or irregularly) calculates a popularity degree indicating the degree of the popularity of a document, based on the link relation between documents collected by the collection unit 102 and stores the calculation result in the popularity degree table 113. When calculating the popularity degree, the popularity degree calculation unit 102 selects documents collected or updated during the first time period, from all the documents collected by the collection unit 101 as target documents whose popularity degree are calculated. In this case, since a time period that is too short will not obtain a meaningful popularity degree, the first time period must be fairly long. For example, for the first time period, "150 days before a popularity degree is calculated" is used.

In this way, a document that is left without being updated after being prepared can be eliminated from targets for which the popularity degree are calculated. Therefore, the problem that if the popularity degree of a document is simply calculated sequentially, the popularity degree will always increase and never decrease can be solved.

The popularity degree transition calculation unit 103 calculates a popularity transition degree indicating both the direction and degree of the popularity degree transition of each document, based on the popularity degree calculated by the popularity degree calculation unit 102 during the second time period and stores the calculation result in the popularity degree transition table 114. In this case, since a time period that is too long cannot catch a short-term transition of a popularity degree, the second time period must be short in some measure, for example, several weeks. For example, for the second time period, "within 14 days before a popularity transition degree is calculated" is used.

More specifically, for example, the popularity degree transition calculation unit 103 obtains a popularity degree calculated during the second time period for each document from the popularity degree table 113 and calculates a linear regression equation against the time of the obtained popularity degree to obtain the regression coefficient of the linear regression equation as the popular transition degree. The popularity degree transition calculation unit 103 can also use a popularity degree order obtained by ranking each document according to the popularity degree instead of a popularity degree. In this way, how the popularity of a document in a network varies as time elapses can be analyzed.

The related non-text contents judgment unit 104 judges the type of each document, based on the extension of a file name included in the document location information about each document or character strings located before and after a part in the document in which a link is embedded. The related non-text contents judgment unit 104 judges whether non-text contents included in each document are related to the contents of the document, based on the link relation between documents. Then, the related non-text contents judgment unit 104 stores the non-text contents that are judged to be related to the contents of each document, in the non-text contents table 115 in relation to the document. In this way, non-text contents unrelated to the contents of each document, from all the non-text contents included in the document, can be eliminated, and non-text contents related to the contents of the document can be sorted in relation to the document.

The service type judgment unit 105 judges the type of a service provided by a document, based on information for describing an input column included in each text document and stores the judged service type in the service type table 116 in relation to the document. In this way, a service type provided by each document can be sorted in relation to the document.

The page sorting unit 106 sorts each document according to a related field and the like. Since there are a variety of sorting technologies as to a document sorting method, the detailed description is omitted in the description of the preferred embodiments.

The retrieval service unit 107 retrieves a document from a network and provides a user with the retrieval result. In this retrieval, the retrieval service unit 107 obtains information about the document obtained by retrieval from both the popularity degree table 113 and popularity degree transition table 114, and provides the user with both the popularity degree and popularity transition degree in addition to both the information indicating the contents of the retrieved document and document location information. In this way, the user can judge how the popularity of the retrieved document is situated, and specifically, whether the document is becoming more popular or less popular, by information provided on the output screen of the retrieval result.

Furthermore, the retrieval service unit 107 can also obtain information about the document obtained by the retrieval from both the non-text contents table 115 and service type table 116, and can also provide the user with both information about non-text contents related to the retrieved document and information about a service type provided by the retrieved document. In this way, the user can judge what non-text contents the document obtained by the retrieval includes or what service the document obtained by the retrieval provides by information provided on the output screen of the retrieval result without accessing (browsing) the document.

If the user requests the provision of information about the popularity degree of each of one or more documents, the retrieval service unit 107 can also obtain one or more pieces of information about the documents from both the popularity degree table 113 and popularity degree transition table 114, and can also provide the user with one or more pieces of obtained information in time series. In this way, the user can analyze the transition of the popularity degree of a document.

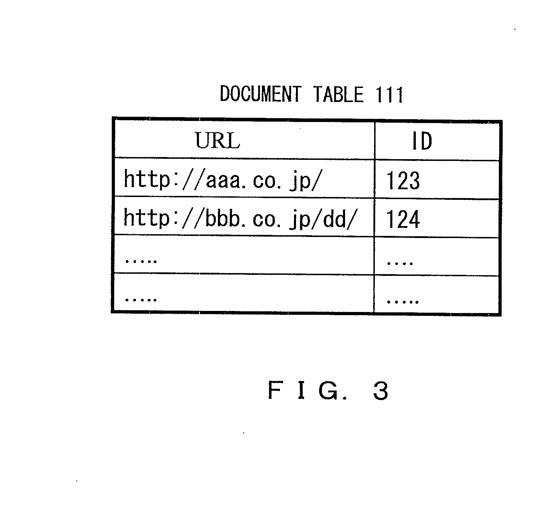

The data structure of each table is described below with reference to Figs. 3 through 8. First, the data structure of the document table 111 is described with reference to Fig. 3. As shown in Fig. 3, the document table 111 stores both the document location information about each document and a corresponding document ID. In this way, the document location information is converted into a document ID, and in subsequent processes, information about the link relation and the like of each document can be managed using the document ID.

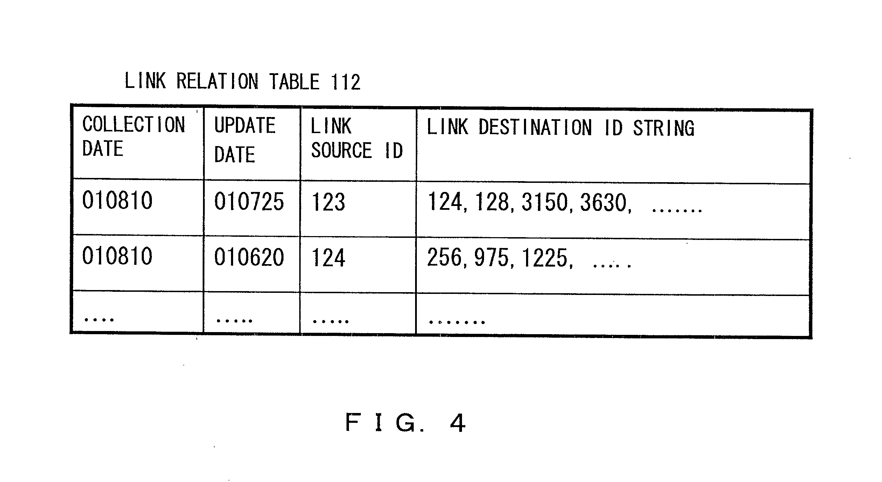

Next, the data structure of the link relation table 112 is described with reference to Fig. 4. The link relation table 112 stores the link relation information of each document. As shown in Fig. 4, link relation information includes the collection day/time (or date) of a document, update day/time (or date), the document ID of a link source document and the document ID of a link destination document as items. In the following description, the document ID of a link source document and the document ID of a link destination document are called a "link source ID" and a "link destination ID", respectively. If it is difficult to obtain the update day/time of each document, the collection day/time can also be used instead of the update day/time.

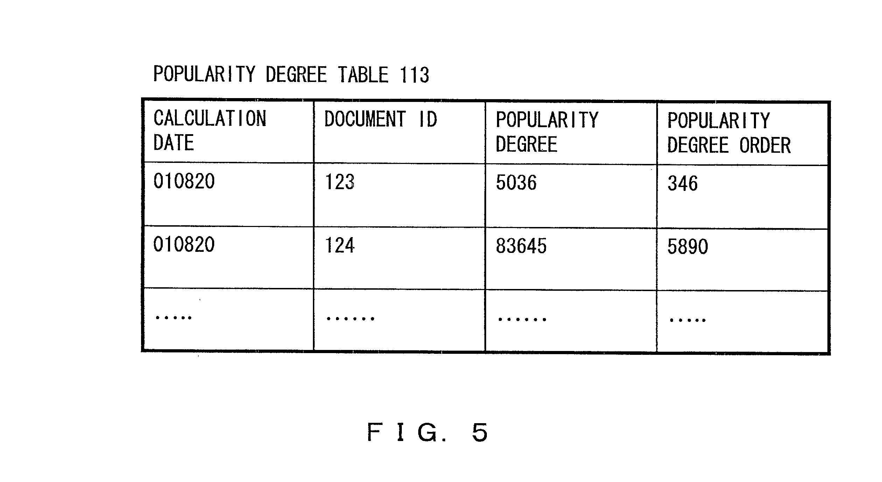

Next, the data structure of the popularity degree table 113 is described with reference to Fig. 5. The popularity degree table 113 stores the popularity information of each document. As shown in Fig. 5, the popularity information includes as items the calculation day/time (or date) of a popularity degree, the document ID of a document, a calculated popularity degree and a popularity degree order obtained by ranking each document according to the popularity degree.

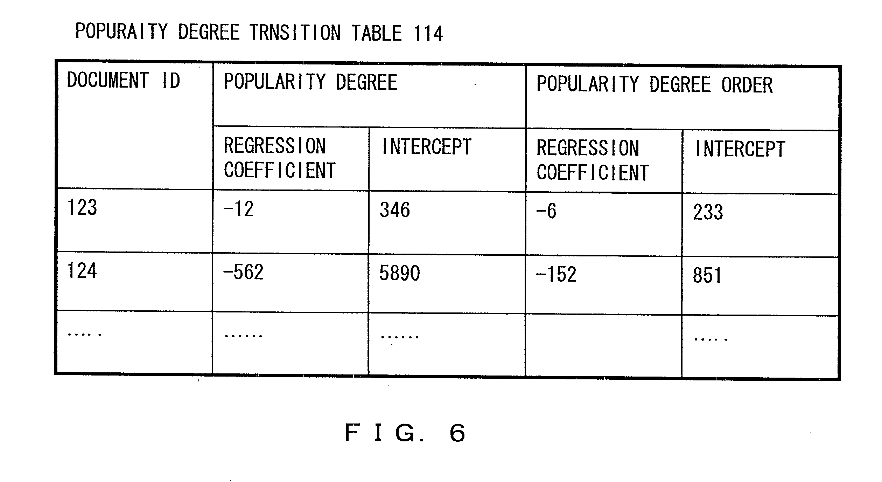

Next, the data structure of the popularity degree transition table 114 is described with reference to Fig. 6. The popularity degree transition table 114 stores the popularity degree transition information of each document. The popularity degree transition information includes as items the document ID of a document, the regression coefficient (gradient)/intercept of a regression equation obtained by calculating the linear regression equation of a popularity degree, and regression coefficient (gradient)/intercept of a regression equation obtained by calculating the linear regression equation of a popularity degree order.

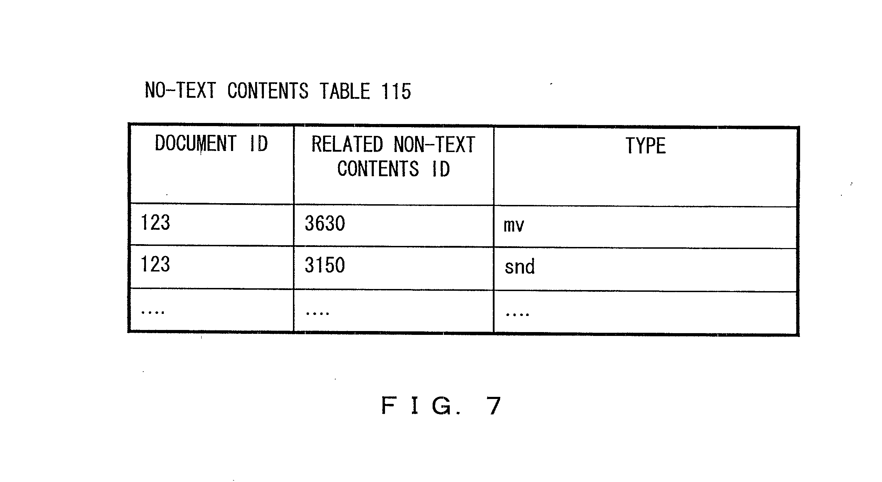

Next, the data structure of the non-text contents table 115 is described with reference to Fig. 7. The non-text contents table 115 stores the document ID of a document with a link destination, the document ID of non-text contents document linked to by the document and is related to the contents of the document (hereinafter called a "related non-text contents ID") and the file type of the non-text contents document.

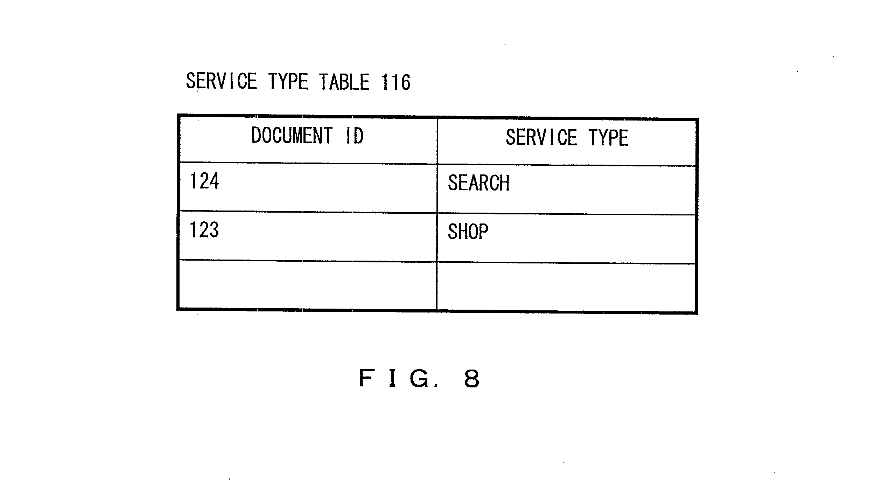

Lastly, the data structure of the service type table 116 is described with reference to Fig. 8. As shown in Fig. 8, the service type table 116 stores both the document ID of each document and a service type provided by the document.

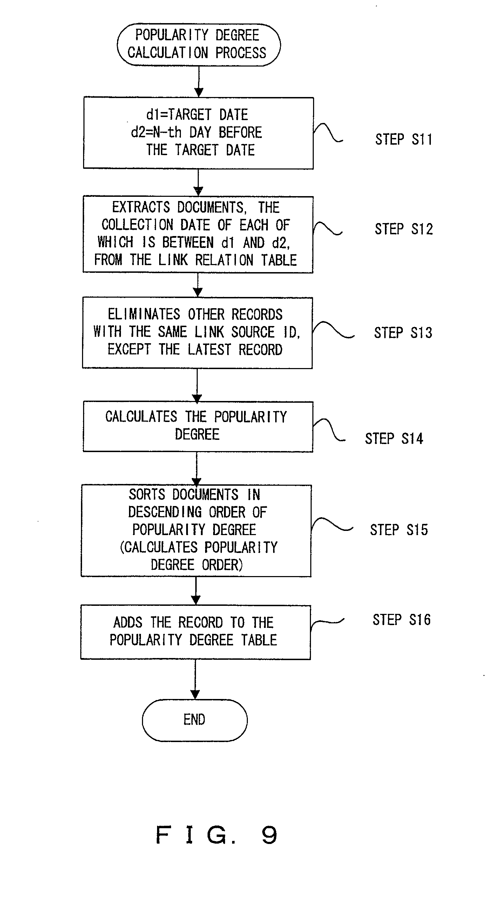

The process of each unit constituting the document retrieval apparatus 100 is described below with reference to Figs. 9 through 15. The description of the process of the page sorting unit 106 is omitted for the reason given above.

First, the collection unit 101 consecutively collects documents from a network, analyzes the link relation between the collected documents and stores the collection result and the analysis result in the document table 111 and link relation table 112, respectively. The popularity degree calculation unit 102 regularly, for example, every day, calculates the popularity degree of each document collected or updated during a specific time period before the calculation date. "Every day" is just an example and the present invention is not limited to "every day". The procedure of a process for calculating a popularity degree is described below with reference to Fig. 9.

As shown in Fig. 9, first, the popularity degree calculation unit 102 starts at a specific time every day. If a popularity degree calculation date for calculating a popularity degree is d1, the popularity degree calculation unit 102 designates d2 that is the N-th day, for example, the 150th day, before d1 as a calculation starting date (step S11). The "150th day" is just an example. "Any days" is acceptable as N if "the days" is long enough to obtain a meaningful popularity degree.

Then, the popularity degree calculation unit 102 extracts link relation information, the collection or update date of which falls between the calculation starting date d2 and calculation date d1 (step S12). By restricting the collection or update date of a document, the popularity degree of which is calculated, to within a specific time period, a document that is not updated after being prepared can be eliminated from popularity degree calculation targets.

If a plurality of pieces of the extracted link relation information include a plurality of pieces of link relation information with the same link source ID, the popularity degree calculation unit 102 deletes all the plurality of pieces of link relation information with the same link relation source ID other than that of the latest collection or update date (step S13). In this way, repeated calculation of the popularity degree of the same document can be prevented.

The popularity degree calculation unit 102 calculates the popularity degree of each document, based on the extracted link relation information (step S14). More specifically, the popularity degree calculation unit 102 calculates the popularity degree of each document, based on both link relation and a similarity degree, indicating the similarity between a character string indicating the document location information about a link source document and a character string indicating the document location information about a link destination document, without referring to the contents of the document. The calculation procedure of a popularity degree is described below.

The basic concept of popularity degree calculation is as follows.

1. A document that is linked to by a lot of documents, each of which has document location information that is not similar to that of the document, has a high popularity degree.

For example, although a plurality of documents provided in the same site are linked to one other, generally a plurality of pieces of document location information about the plurality of pieces of documents are similar to one another. This is because it can be estimated that a document that is linked to documents, each with a similar character string indicating document location information, has a low popularity degree.

2. The larger the number of linked documents of a document, the higher the popularity degree of the document. A document that is linked to by another document, the popularity degree of which is high and which has different document location information that is not similar to that of the document, has a high popularity degree.

For example, although the document of a popular directory service, governmental and public offices or the like is linked to by a lot of documents, it can be considered that a document linked to by such a document has a higher popularity degree than a document linked to by a site opened by an individual or a document linked through the entry page of the contents. Documents provided in a service site having a lot of documents and a mirror site are often linked to one another in the site. Since the plurality of pieces of the document location information about documents in one site are generally similar, for example, the domains are the same, if an idea that a document that is linked to by another document with document location information that is not similar to that of the document has a high popularity degree is introduced, it is avoided that the popularity degree increases for a document linked to by a lot of documents in the same site.

3. The similarity degree of document location information is defined based on a character string indicating document location information in such a way that the similarity degree of a document with a different server address, a different path and a different file name may be minimized and that the similarity degree of a document in a mirror site or the same site may be maximized.

By introducing the three ideas described above, a weight is given to each link relation and the weighted link relation is handled instead of handling all link relations in an equal manner. More specifically, a weight is given to a link relation as the reciprocal number of the similarity degree between the document location information about a link source document and the document location information about a link destination document.

The popularity degree calculation procedure is described in more detail below.

If a document aggregate whose popularity degree is calculated, the popularity degree of document p, the link destination document aggregate linked by to document p, the link source document aggregate linking to document p, the similarity degree between the document location information about documents p and q, and a difference degree are DOC={p1, p2, ..., pN}, $W_p$, Ref(p), Refed(p), sim(p, q) and diff(p, q)=1/sim(p, q), respectively, the weight lw(p, q) of a link relation in the case where document q is linked to by the document p is defined as follows.

$$lw(p, q) = \frac{\text{diff}(p, q)}{\sum_{i \in \text{Ref}(p)} \text{diff}(p, i)} = \frac{1}{\text{sim}(p, q) \sum_{i \in \text{Ref}(p)} \frac{1}{\text{sim}(p, i)}} \quad \cdots (1)$$

As is seen from equation (1), the lower the similarity degree between the URL of document p and the URL of document q or the smaller the number of link destination documents linked to by document p, the larger the weight lw(p, q).

The popularity degree $W_q$ of document q can be defined as the solution of the following simultaneous linear equations (2) on the condition that $C_q$ is a constant (which is the lower limit of the popularity degree and a different value can also be given depending on a document) of each document p∈DOC.

$$W_q = C_q + \sum_{p \in \text{Refed}(q)} W_p \times \text{lw}(p,q) \qquad \dots (2)$$

The popularity degree calculation unit 102 calculates the popularity degree of each document by solving the simultaneous linear equations (2). Since there are a lot of existing algorithms that can be used as the solution method of such simultaneous linear equations, the description is omitted. The calculation method of the similarity degree sim (p, q) in the document location information between documents p and q in equation (1) is described later. It can be judged from both equations (1) and (2) that the ideas described above are implemented. Specifically, it can be judged from equation (1) that, if the similarity degree in the document location information between documents p and q is low, the weight of link relation lw increases. It can be judged from equation (2) that the popularity $W_q$ of a document that is linked to by a document with a high link relation weight lw is high. Specifically, the popularity degree of a document that is linked to by a document having document location information with a low similarity degree is high. It can also be judged from equation (2) that a document linked to by the larger number of documents has the higher popularity degree. Furthermore, it can be judged from equation (2) that the popularity degree of a document that is linked to by a document with a high popularity degree W is high.

Next, the similarity degree sim (p, q) in the document location information between documents p and q in equations (1) and (2) is described. Although the description is given assuming that document location information is a URL, the present invention is not limited to a URL.

Generally, the URL of a document is composed of three kinds of information: a server address, a path and a file name. For example, the URL of a WWW document http://www.flab.fujitsu.co.jp/hypertext/news/1999/p roduct1.html is composed of three kinds of information: a server address (www.flab.fujitsu.co.jp), a path (hypertext/news/1999) and a file name (product1.html)

Furthermore, a server address is hierarchically divided by "." and an address indicates a higher hierarchical level in the rightward direction. For example, if a server address is www.flab.fujitsu.co.jp, a level of a machine (www), a level of a laboratory (flab), a level of Fujitsu (fujitsu), a level of a company (co.) and a level of Japan (jp) are represented from left to right.

The weight of a link relation according to the preferred embodiment is calculated based on the following ideas.

1. Since similar documents are often inputted to the same directory, a plurality of pieces of document location information, both with the same server and the same path, often have similar contents.

2. Document location information of a document in a mirror site provided to distribute access and document location information about a document in an original site have high similarity degree. For example, in most of these cases, the document location information about these documents are different in only the server address section and are the same in both the remaining path and file name.

3. A plurality of pieces of document location information that are different in all of a server address section, a path and a file name have low similarity degrees.

In this preferred embodiment, the similarity degree in document location information between two pieces of given documents p and q is defined by the combination of three factors: the server address section, path and file name. For the similarity degree sim(p, q), for example, a domain similarity degree sim-domain (p, q) or a merged similarity degree sim-merge(p, q) can be used.

A domain similarity degree sim-domain(p, q) is calculated based on a similarity degree in a domain. A domain is the latter half of a server address and represents a company or an organization. In the case of a U.S. server address that ends in ".com", ".edu", ".org" and the like, two addresses from the right end correspond to the domain. In the case of other countries' the other server address that ends in ".jp", ".fr" or the like, three addresses from the right end correspond to the domain. For example, the domain of www.fujitsu.com is "fujitsu.com" and the domain of www.flab.fujitsu.co.jp is "fujitsu.co.jp".

The domain similarity degree between documents p and q is defined as follows.

```
sim-domain(p, q)

= 1/α (if p and q have the same domain)

= 1 (if each of p and q has a different domain)

                                    .... (3)
```

In equation (3), it is assumed that $\alpha$ is a constant and takes a real value that is larger than 0, and is smaller than 1. By introducing the concept of sim-domain(p, q), documents having document location information each with a different domain can be made so they are easily retrieved. In other words, it makes it difficult to search for documents having document location information with the same domain.

As sim(p, q), a merged similarity degree sim-merge(p, q) obtained by merging three kinds of information described earlier can also be defined as follows.

$$sim\text{-}merge(p, q)$$

$$= (\text{similarity degree of server address})$$

$$+ (\text{similarity degree of path})$$

$$+ (\text{similarity degree of file name}) \qquad (4)$$

The calculation method of each term on the right side of equation (4) is described below.

To obtain a similarity degree of a server address the address hierarchies of two documents are compared from the right end. When the n levels are matched, the similarity degree of a server address of the documents is defined to be (1+n). For example, when www.fujitsu.co.jp and www.flab.fujitsu.co.jp are compared, the three levels from right end of the documents. In this case, the merged similarity degree between the documents is 4. When server addresses of www.fujitsu.co.jp and www.fujitsu.com are compared, no level in both server addresses are matched (no matched level), the merged similarity degree between the documents is 1.

To obtain a similarity degree of a path, each factor of a path separated by "/" is compared from the top. The number of matched levels is defined as the similarity degree of a path. For example, if /doc/patent/index.html and /doc/patent/1999/2/file.html are compared, two levels are matched. In this case, the similarity degree of a path between the documents is 2.

To obtain a similarity degree of a file name, when two file names are matched, the similarity degree of the files is defined as 1.

According to this sim-merge (p, q), the popularity degree of a document linked to by a document with a similar URL becomes low compared with the popularity degree of a document with URL that is not similar. Therefore, by introducing the concept of sim(p, q) or diff(p, q) into lw(p, q), a problem that the popularity degree becomes high only if the servers (sites) or users include a lot of documents can be solved.

After calculating the popularity degree, the popularity degree calculation unit 102 obtains a popularity degree order by sorting each document in descending order of the popularity degree (step S15). A popularity degree order sometimes increases and sometimes decreases as time elapses. Therefore, the problem of the conventional calculation method that a popularity degree simply increases as time elapses can also be solved by paying attention to the transition of a popularity degree order in a time series instead of the transition of a popularity degree. Lastly, the popularity degree calculation unit 102 stores both the calculated popularity degree and popularity degree order in the popularity degree table 113 together with both the document ID of each document and the popularity degree calculation date (step S16), and terminates the process.

For example, when providing a user with the retrieval result of documents, each document can also be sorted or ranked based on the popularity degree calculated as described above. Alternatively, when providing a user with information about a specific document, the popularity degree of the document can be provided to the user, which is described later.

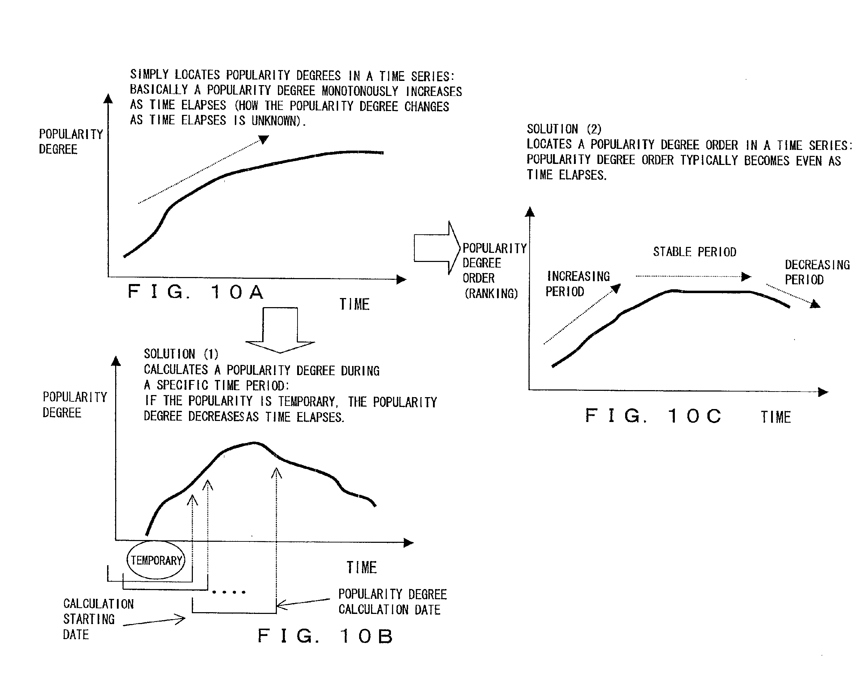

The characteristic in the calculation of a popularity degree of the present invention is described below with reference to Fig. 10. Fig. 10A shows the transition in a time series of a popularity degree calculated by the conventional calculation method. In Fig. 10A, horizontal and vertical axes represent time and a popularity degree, respectively. Since an author or an administrator seldom deletes or updates a document once published on the Web, when the popularity degree of the document is calculated simply based on the number of other documents linking to the document, the number of times it is linked to by other documents, as in the conventional case, the popularity degree never decreases and always increases, as shown in Fig. 10A.

Fig. 10B shows the transition in a time series of a popularity degree calculated by the calculation method according to this preferred embodiment. In Fig. 10B too, horizontal and vertical axes represent time and a popularity degree, respectively. According to the present invention, since the popularity degree for documents collected or updated during a specific time period between a calculation starting date and a popularity degree calculation date are calculated, documents that are not updated for a long time after they were initially prepared are eliminated from calculation targets, unlike the conventional case. Therefore, for example, the popularity degree of a document linked to by other documents not updated for a long time is calculated as being low compared with the conventional case. In this way, the conventional problem that a popularity degree always increases can be solved.

For example, since the top page of a site that has just opened on the Web is linked to by a lot of documents in the site, the popularity degree of the top page is calculated as being high at first. However, if the pages on the site are not updated subsequently, the popularity degree of the top page decreases and the high popularity degree is only temporary.

Although the popularity degree of the document shown in Fig. 10B rapidly increases at first, after a specific length of time, the popularity starts to decrease and continues to decrease after that point. In this way, it is found that the popularity of the document is only temporary.

Fig. 10C shows the transition in a time series of a popularity degree order based on a popularity degree calculated by the calculation method according to this preferred embodiment. In Fig. 10C also, horizontal and vertical axes represent time and a popularity degree order, respectively. A popularity degree order is information indicating the relative popularity degree of a document among all the documents whose popularity degrees have been calculated. Therefore, even if the popularity degree is calculated by the conventional calculation method, it is avoided that the popularity degree order continues to increase. Therefore, by judging the popularity degree of a document, based on the transition in a time series of a population degree order also, the conventional problem that a popularity degree always increases can be solved.

According to the change over time of a popularity degree order based on a popularity degree calculated by the calculation method according to the present invention, if the popularity degree order of a document out of all documents whose popularity degrees have been calculated, changes in a typical manner, it is found to become almost constant after sufficient passage of time, as shown in Fig. 10C. If the popularity degree of the document increases, the popularity degree order also rises. If the popularity degree of the document decreases, the popularity degree order also falls. Generally, the popularity of a document enters a period of increase at first, then a period of stability continues and finally a period of decrease begins. In this case, as shown in Fig. 10, the popularity degree order continues to rise during the period of increase, becomes almost constant during the period of stability and continues to fall during the period of decrease. The shape of the curve of the popularity degree order becomes an upwards-convex shape.

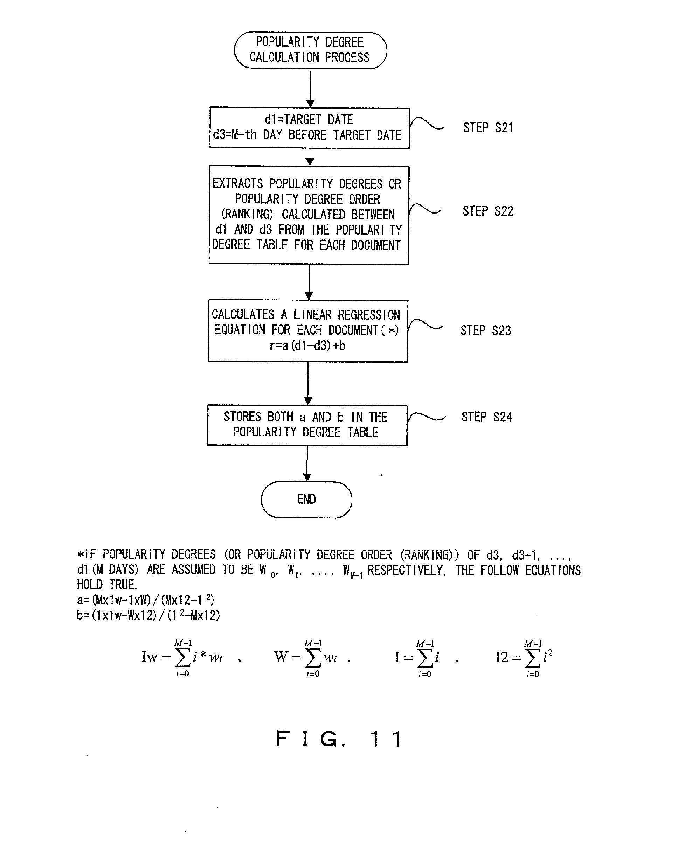

Next, the procedure for calculating a popularity transition degree is described with reference to Fig. 11. When the popularity degree calculation unit 102 calculates a popularity degree, the popularity degree transition calculation unit 103 obtains a popularity degree calculated during a specific time period from the popularity degree table 113 and calculates a popularity transition degree, which is the transition degree in a time series of a popularity degree.

First, the popularity degree transition calculation unit 103 determines a date d3 which is the M-th day, for example, the 14th day, before popularity degree calculation date d1 as a calculation starting date (step S21). The "14th day" is just an example. If M is too long, the short-term transition of a popularity degree cannot be detected. Therefore, it is preferable for M to be several weeks.

Then, the popularity degree transition calculation unit 103 obtains the popularity degree or popularity degree order of each document calculated during a time period between calculation starting date d3 and popularity degree calculation date d1, from the popularity degree table 113 (step S22). The popularity degree transition calculation unit 103 calculates the linear regression equation against time of a popularity degree or popularity degree order for each document and obtains both the regression coefficient and intercept b of the linear regression equation (step S33). If a linear regression equation is calculated based on a popularity degree, the regression coefficient a corresponds to a popularity transition degree. If the linear recurrence is calculated based on a popularity degree order, a value $a/b$ obtained by dividing regression coefficient a by intercept b corresponds to the popularity transition degree.

The calculation method of a linear regression equation is described below in detail. If a popularity degree values or popularity degree order of a document at each date between dates d3 and d1 (d3, d3+1, ..., d1) are assumed to be $w_0$, $w_1$, ..., $w_{M-1}$, respectively, linear regression equation r can be calculated by the least mean squares method as follows.

$$r = a(d1 - d3)b$$

In the equation described above, a is a regression coefficient and can be calculated as follows.

$$a = (M \times Iw - I \times W)/(M \times I2 - I^2)$$

In the equation described above, b is an intercept and can be calculated as follows.

$$b = (I \times Iw - W \times I2)/(I^2 - M \times I2)$$

In the equation described above, each of Iw, W, I and I2 can be calculated as follows.

$$Iw = \sum_{i=0}^{M-1} i \times w_i$$

$$W = \sum_{i=0}^{M-1} w_i$$

$$I = \sum_{i=0}^{M-1} i = \frac{M(M-1)}{2}$$

$$I2 = \sum_{i=0}^{M-1} i^2 = \frac{M(M-1)(2M-1)}{6}$$

Lastly, the popularity degree transition calculation unit 103 stores both the calculated regression coefficient a and intercept b of each document together with the document ID, in the popularity degree transition table 114 (step S24) and terminates the process.

If in the case of a linear regression equation calculation based on a popularity degree, it is indicated that the regression coefficient a of a linear regression equation of a document is positive, the popularity degree of a document is increasing and that the larger the absolute value of a coefficient a, the greater the increase in speed. If intercept b takes a relatively high value, the popularity degree is stabilized at a high level. If intercept b takes a relatively low value, the popularity degree is stabilized at a low level.

If in the case of a linear regression equation calculation based on a popularity degree order, it is indicated that the regression coefficient a of a linear regression equation is negative, the popularity degree of a document is increasing and the larger the absolute value of the regression coefficient a, the greater the increase in speed. If intercept b takes a relatively low value, the popularity degree is stabilized at a high level. If intercept b takes a relatively high value, the popularity degree is stabilized at a low level.

When providing a user with information about a document, the popularity transition degree of the document is provided to the user together with both the document location information about the document and information indicating both the title and contents. The popularity transition degree can also be provided using an icon illustrating both the direction and degree of popularity change, which is described later.

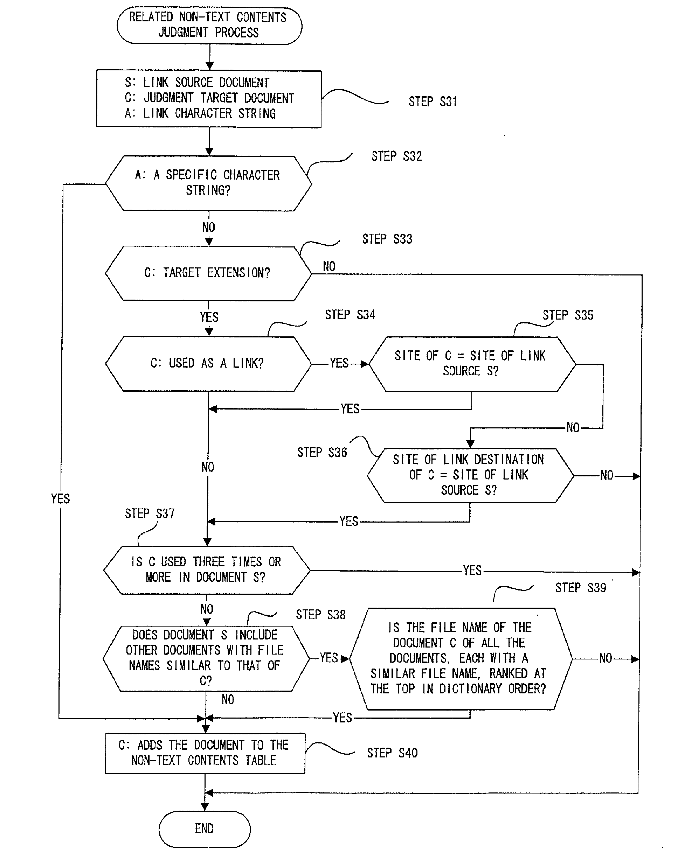

Next, a process for judging non-text contents related to the contents of each document is described with reference to Fig. 12. Many documents include non-text contents, such as images, voice and the like, in addition to text contents. Some non-text contents included in a document may be non-text contents unrelated to the contents of the document, such as a banner advertisement and the like. The related non-text contents judgment unit 104 judges whether non-text contents included in a document are related to the contents of the document, based on a link relation embedded in the document.

For that purpose, first, the related non-text contents judgment unit 104 refers to the link relation table112 and extracts link relation information including a link destination ID. If the extracted link relation information includes a plurality of pieces of link relation information and each piece has the same link source ID, only link relation information with the latest collection or update date is adopted and the others are deleted. This is because the same process is prevented from being applied to the same document.

After this, a document aggregate composed of link source documents S specified by a link source ID included in the extracted link relation information is designated as a link source document aggregate. A document specified by a link destination ID included in the extracted link relation information, that is, a link destination document, is termed a "judgment target document C".

Procedures in steps S31 through S40 are applied to each judgment target document C included in each link source document S. First, the related non-text contents judgment unit 104 extracts a link character string A existing in the vicinity of a part in the link source document S, in which the link to the judgment target document C is embedded from each link source document S (step S31).

For example, in the case of a document using HTML, the related non-text contents judgment unit 104 can extract 100 bytes each before and after an anchor tag (<a>) as a link character string A from a link source document S. Then, the related non-text contents judgment unit 104 judges whether the link character string A is a specific character string (step S32).

A specific character string is, for example, a character string describing a format of the judgment target document C is a non-text format, such as "MPEG", "animation", "streaming", "video", "audio", "mp3", the format name of animation, etc., and the like. A table for defining these specific character strings, which is not shown in Fig. 2, is provided in advance in the document retrieval apparatus 100.

If it is judged that link character string A includes a specific character string (Yes in step S32), the related non-text contents judgment unit 104 judges that the judgment target document C is non-text contents related to the contents of the link source document S. Then, the flow proceeds to step S40. The related non-text contents judgment unit 104 stores the document ID of the judgment target document C in the non-text contents table 115 as a related non-text contents ID together with both the format type of the judgment target document C and the document ID of a link source document S, and terminates the process of the judgment target document C.

If it is judged that link character string A doesn't include a specific character string (No in step S32), the related non-text contents judgment unit 104 further judges whether the extension of the file name of judgment target document C included in the document location information about the judgment target document C is a specific extension (step S33).

In the current Web, for example, the following can be used for a special extension. Since each extension is obvious to a person having ordinary skill in the art, the description of each extension is omitted. This example does not restrict the present invention.

- In the case of contents related to music
    mp3, wma, wav
- In the case of contents related to animated images
    ram, rm, rv, rmm, wmv, avi, asx, qt, mov, mpeg,mpg, fla, swf
- In the case of contents related to images
    jpg, jpeg

The related non-text contents judgment unit 104 can also judge whether judgment target document C is non-text contents, based on such an extension. A table for defining these specific extensions, which is not shown in Fig. 2, is provided in advance in the document retrieval apparatus 100. If it is judged that the extension of a file name included in the document location information about judgment target document C is not a specific extension (No in step S33), the related non-text contents judgment unit 104 judges that judgment target document C is not non-text contents and terminates the process of the document.

If it is judged that the extension of a file name included in the document location information about judgment target document C is a specific extension (Yes in step S33), the related non-text contents judgment unit 104 further judges whether the judgment target document C is used as a link. For example, in the case of HTML, this judgment can be made based on a tag. The fact that judgment target document C is used as a link means, for example, that another document can be browsed by referring a link relation embedded in the document (for example, clicking or touching), such as a banner advertisement image.

For example, if judgment target document C ( in the example, an image) is used as a link in a document described in HTML, the fact is often described as follows . This example does not restrict the present invention.

<a href="Document location information of link source documents of judgment target document C "><img src=" Document location information of judgment target document C"></a>

The related non-text contents judgment unit 104 refers to the document table 111 using the document IDs of both judgment target document C and link source document S, and obtains two pieces of document location information about both documents. Then, the related non-text contents judgment unit 104 judges whether a site storing judgment target document C and a site storing link source document S are the same, based on both the document location information about judgment target document C and link source document S (step S35).

More specifically, if the document location information is a URL, the related non-text contents judgment unit 104 judges whether a site storing judgment target document C and a site storing link source document S are the same, based on the server addresses or domains of both the URL of judgment target document C and the URL of link source document S.

If it is judged that a site storing judgment target document C and a site storing link source document S are the same (Yes in step S35), it is estimated that judgment target document C is related to the contents of link source document S. Therefore, the flow proceeds to step S37, which is described later. This is because if judgment target document C is related to the contents of link source document S, judgment target document C is often stored in the same site as link source document S.

If it is judged that a site storing judgment target document C and a site storing link source document S are different (No in step S35), the related non-text contents judgment unit 104 further judges whether a site storing the link destination document of the judgment target document C and a site storing the link source document S are the same, based on both the document location information about the link source document S and the document location information about the link destination document of the judgment target document C (step S36). The document location information about the link destination document of the judgment target document C is often described in the vicinity of a tag for embedding a link in the judgment target document C as described in the example given above.

If it is judged that a site storing the link destination document of judgment target document C and a site storing link source document S are the same (Yes in step S36), the flow proceeds to step S37. This is because since it is estimated that the link destination document of judgment target document C is related to the contents of link source document S, it can be estimated that judgment target document C may also be related to the contents of link source document S.

If it is judged that a site storing the link destination document of judgment target document C and a site storing link source document S are different (No in step S36), the related non-text contents judgment unit 104 estimates that judgment target document C is a document unrelated to the contents of link source document S, such as a banner advertisement, and terminates the process of the judgment target document C.

In step S37, the related non-text contents judgment unit 104 judges whether judgment target document C is used a prescribed number of times, for example, three times or more. "Three times" is just an example, and the prescribed number is not limited to any specific number. If it is judged that judgment target document C is used three times or more (Yes in step S37), the related non-text contents judgment unit 104 judges that judgment target document C is not related to the contents of the link source document S and terminates the process of the judgment target document C. Otherwise, the flow proceeds to step S38.

For example, if judgment target document C is of a format, or a material for document preparation such as a bullet-point list, there is a high possibility that judgment target document C may be used multiple number of times in one document. Since it cannot be considered that such a document is related to the contents of link source document S, the document is not handled as related non-text content.

If the judgment in step S37 is "No", the related non-text contents judgment unit 104 further obtains the file name of the link destination document of link source document S from the document table 111, based on a link destination ID included in the link relation information of link source document S and judges whether the link source document S has another link destination document with a file name similar to that of judgment target document C (step S38).

If it is judged that the link source document S does not have another link destination document with a file name similar to that of judgment target document C (No in step S38), the flow proceeds to step S40 and the related non-text contents judgment unit 104 registers the judgment target document C in the non-text contents table 115 in the way described above.

If it is judged that the link source document S has another link destination document with a file name similar to that of judgment target document C (Yes in step S38), the related non-text contents judgment unit 104 judges whether the file name of judgment target document C is ranked at the top in a dictionary order, of all the file names of the link destination documents each with a file name similar to that of the judgment target document C (step S39). A dictionary order is, for example, an alphabetical order or a descending order of a number.

If the related non-text contents judgment unit 104 judges that the file name of judgment target document C is ranked at the top in dictionary order (Yes in step S39), the flow proceeds to step S40. In step S40, the related non-text contents judgment unit 104 registers the judgment target document C in the non-text contents table 115 and terminates the process of the document. Otherwise (No in step S39), the unit 104 terminates the process of the judgment target document C without executing step S40.

For example, if link source document S displays a list of images like an album and if all the images are handled as documents related to the contents of the link source document S, there are too many related documents and this fact makes it problematic to provide a user with a retrieval result. However, in such a case, the respective remaining parts excluding a numeric part are often the same, for example, pict01.jpg, pict02.jpg, pict03.jpg and the like. Therefore, if there are link destination documents each with a similar file name, such problems can be avoided by registering only a document with the highest-ranked file name in a dictionary order as related non-text content.

After terminating the process of a specific judgment target document C in this way, the related non-text contents judgment unit 104 refers to the link relation information of link source document S and judges whether the link source document S has another non-judged link destination document. If the link source document S includes a non-judged link destination document, the related non-text contents judgment unit 104 designates the non-judged link destination document as a new judgment target document C and performs the processes in steps S31 and after, on the document.

If the link source document S does not include a non-judged link destination document, the related non-text contents judgment unit 104 extracts another unprocessed link source document S from the link source document aggregate and performs the same process, on the other link destination document C of the link source document S. When the process is performed for all link destination documents of all the link source documents S, the related non-text contents judgment process is terminated.

When information about each document is provided to a user, information indicating the type of non-text contents linked to the document, such as an icon, can also be provided to the user based on the judgment result described above in addition to both the document location information about the document and information indicating both the title and contents. In this way, a user can know what related non-text contents the document has without actually browsing the document. Furthermore, by embedding a link to the related non-text contents in an icon indicating the type of the related non-text contents, when a user makes a selection (clicks, touches, etc.), the related non-text contents can also be displayed on the screen of the user or reproduced, which is described later.

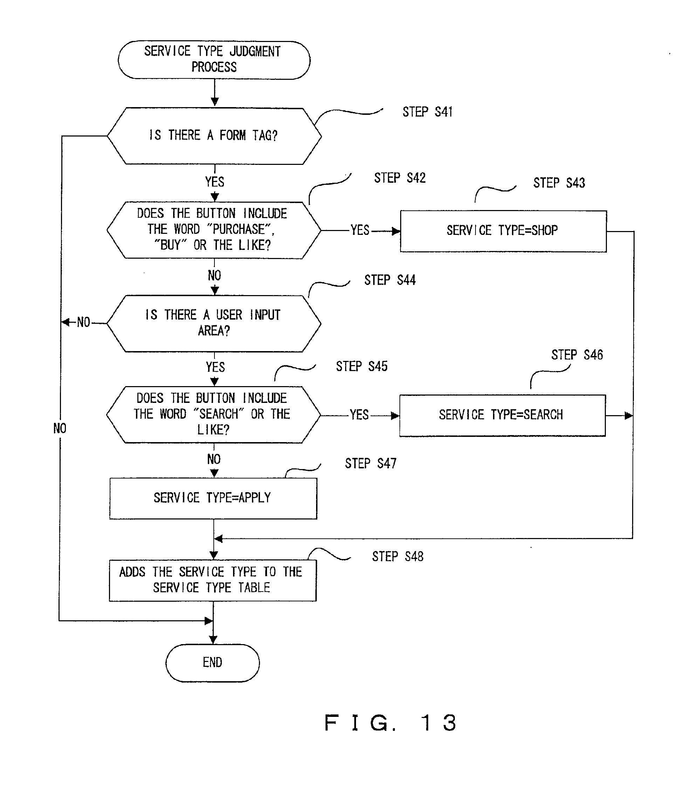

Next, a process procedure for judging the service type of a document is described with reference to Fig. 13. A variety of services are often provided to the reader of a document by the document. The service type judgment unit 105 judges the type of a service provided by a document, based on a form tag used in the document. In the following description, three types of services, retrieval, shopping and application (registration) are judged.

A retrieval service is a service for searching for something using a keyword inputted by a user (or reader, etc) . A shopping service is a service for selling a user a commodity. An application (registration) service is a service for receiving a name, an address and the like from a user and receiving the application or registration for a membership or a prize. These three services are just examples, and the present invention is not limited to the three services. By adding many more procedures to this service type judgment process, more detailed service types can also be judged.

First, the service type judgment unit 105 extracts a document including text (not shown in Fig. 13) from collected documents. Whether a document includes text can also be judged, for example, based on the extension of the file name of each document. The following process is performed for each extracted document.

Then, the service type judgment unit 105 judges whether the document includes a form tag (step S41). If the document does not include a form tag (No in step S41), the unit 105 terminates the process of the document since it can be judged that the document provides no service.

If the document includes a form tag (Yes in step S41), the service type judgment unit 105 further judges whether a button included in the document displays the word(s) "purchase", "buy" or the like (step S42).

For example, in the case of a document described in HTML, a button is often described as follows.

<INPUT TYPE="submit" VALUE="word(s) displayed in button">

If the button includes the word(s) "purchase", "buy" or the like (Yes in step S42), the service type judgment unit 105 judges that the type of service provided by the document is "shopping" (step S43) and the flow proceeds to step S48. The service type judgment unit 105 registers the service type of the document as "shopping" by storing the judged service type "shopping" in the service type table 116 together with the document ID of the document (step S48).

If the button does not display the word(s) "purchase", "buy" or the like (No in step S42), the service type judgment unit 105 further judges whether the document includes a user input area a (step S44). If the document includes no user input area (N in step S44), it is judged that the document provides no service, and the process of the document is terminated. If the document includes a user input area (Yes in step S44), the service type judgment unit 105 further judges whether a button included in the document displays the word(s) "search" or the like (step S45).

If the button displays the word(s) "search" or the like (Yes in step S45), the service type judgment unit 105 judges that the type of a service provided by the document is "search" (step S46) and the flow proceeds to step S48. In step S48, the service type judgment unit 105 registers the service type provided by the document in the way described above.

If the button does not display the word(s) "search" or the like (No in step S45), the service type judgment unit 105 judges that the type of a service provided by the document is "application" (step S47), and the flow proceeds to step S48.

In this way, the service type judgment unit 105 can judge the service type provided by the document, based on a form tag.

The process for judging a service type may include a variety of variations. For example, between steps S42 and S43, the following processes can also be performed. First, after step S42, the service type judgment unit 105 judges whether the document includes an ISBN (International Standard Book Number) input column. If the document includes an ISBN input column, the unit 105 judges that a service type provided by the document is "book store" and the flow proceeds to step S48. If the document includes no ISBN input column, the flow proceeds to step S43. In this way, a service type provided by a document can be judged in greater detail.

When information about each document is provided to a user, information indicating the type of a service provided by the document, such as an icon, can also be provided to the user based on the judgment result described above in addition to both the document location information about the document and information indicating both the title and contents. In this way, a user can know about the type of a service provided by the document without actually browsing the document. The service type judged in the process described above can also be used to sort each page.

The page sorting unit 106 judges the contents of a document, based on a word /phrase in each document and sorts each document, based on the judgment result. For the word/phrase describing the contents of a document, for example, "Java (registered trademark)", "theme park" and the like are used. The present invention is not limited to these examples. Since the sorting method of each document by this page sorting unit is the same as that of the prior art, the detailed description is omitted. When sorting each document, the page sorting unit 106, for example, can also use the service type provided by each document that is judged by the service type judgment unit 105.

The retrieval service unit 107 searches for a document, according to instructions from the user of the document retrieval apparatus 100, and provides the user with the retrieval result together with the process results of the popularity degree calculation unit 102 and popularity degree transition calculation unit 103, etc., accordingly. More specifically, the retrieval service unit 107 displays a retrieval result in the terminal set of a user together with the process result. The process of the retrieval service unit 107 is described below with reference to a screen displayed in the terminal set of a user, accordingly.

The retrieval service unit 107 provides a user with information about a document obtained by retrieval in a variety of formats . First, a case where a user inputs a keyword and the like and the user is provided with retrieval result obtained using the keyword and the like, is described.

First, the retrieval service unit 107 seeks a document using the keyword and the like inputted by a user and obtains the following information about the required document from each table by using the document ID of the searched-for document.

- The retrieval service unit 107 obtains both the latest popularity degree and the popularity degree order from the popularity degree table 113.
- The retrieval service unit 107 obtains both regression coefficient (gradient) a and intercept b, based on the latest popularity degree and popularity degree order, respectively, from the popularity degree transition table 114.
- The retrieval service unit 107 obtains the document ID of related non-text contents from the non-text contents table 115.
- The retrieval service unit 107 obtains a service type from the service type table 116.

Then, the retrieval service unit 107 generates a popularity degree transition icon illustrating both the direction and rate of change of popularity, based on both the obtained regression coefficient a and intercept b. The popularity degree transition icon displays an arrow and indicates the direction and speed of a popularity degree transition by the direction and angle of the arrow, respectively. The retrieval service unit 107 generates, for example, the following six kinds as popularity degree transition icons. The present invention is not limited to these examples.

Rapidly increasing icon: This icon shows that a popularity degree is rapidly increasing. This icon shows a steeply inclined arrow that rises towards the right.

Increasing icon: This icon indicates that a popularity degree is increasing. This icon shows an arrow rising towards the right and the angle is closer to horizontal compared with that of the rapidly increasing icon.

Decreasing icon: This icon shows that a popularity degree is decreasing. This icon shows an arrow falling towards the right and the angle is closer to horizontal compared with that of the rapidly decreasing icon.

Rapidly decreasing icon: This icon shows that a popularity degree is rapidly decreasing. This icon shows a steeply declined arrow falling towards the right.

Stable icon: this icon shows a horizontal arrow pointing toward the right. This icon can also be divided into two types with different colors: one to indicate high-level stability and the other to indicate low-level stability, as described later.

Unmarked icon: This is an icon without an arrow. This icon shows another state.

As examples of a generation method of a popularity degree transition icon, the following two methods are taken up.

Example 1: Case where a popularity degree transition is calculated based on a popularity degree

(A natural number up to 10000. The greater the number, the higher the popularity degree.)

The retrieval service unit 107 judges which icon should be attached to each searched document, based on both regression coefficient a and intercept b as follows.

Rapidly increasing icon: In the case where a of a document is 50 or more.

Increasing icon: In the case where a of a document is 30 or more and less than 50.

Decreasing icon: In the case where a of a document is -30 or less and more than -50.

Rapidly decreasing icon: In the case where a of a document is -50 or less.

High-level stable icon: In the case where b of a document is 8000 or more.

Low-level stable icon: In the case where b of a document is 3000 or less.

Unmarked icon: Other cases.

Example 2: Case where a popularity degree transition is calculated based on a popularity degree order (a natural number between 1 and a total number of documents including both 1 and the total number).

The retrieval service unit 107 judges which icon should be attached to each document as follows.

Rapidly increasing icon: In the case where a/b of a document is -0.1 or less (a popularity degree increases 10% or more).

Increasing icon: In the case where a/b of a document is -0.05 or less and more than -0.1 (a popularity degree increases 5% or more and less than 10%).

Decreasing icon: In the case where a/b of a document is 0.05 or more and less than 0.1 (a popularity degree decreases 5% or more and less than 10%).

Rapidly decreasing icon: In the case where a/b of a document is 0.1 or more (a popularity degree decreases 10% or more).

High-level stable icon: In the case where b of a document is 1000 or less.

Low-level stable icon: In the case where b of a document is 100000 or more.

Unmarked icon: Other cases.

Then, the retrieval service unit 107 generates a related media icon illustrating the type of related non-text contents for a document whose related non-text contents is registered and embeds a link to the related non-text contents in the related media icon. In this way, if a user selects the related media icon, the user can browse or reproduce the related non-text contents without browsing the link source document (searched document) of the related non-text contents.

The related media icon indicates, for example, the type of related non-text contents. More specifically, if related non-text contents have a jpg format, the related media icon indicates a character string of "jpg". Alternatively, the related media icon can also illustrate a camera for indicating an image. If a document stores a plurality of related non-text contents, this process is applied to each related non-text content.

Furthermore, the retrieval service unit 107 generates a service contents icon illustrating the service type of a document whose service type is registered. The service contents icon indicates, for example, a service type. More specifically, if a service type is "shop", the service contents icon describes a character string of "shop". Alternatively, the service contents icon can illustrate "shopping".

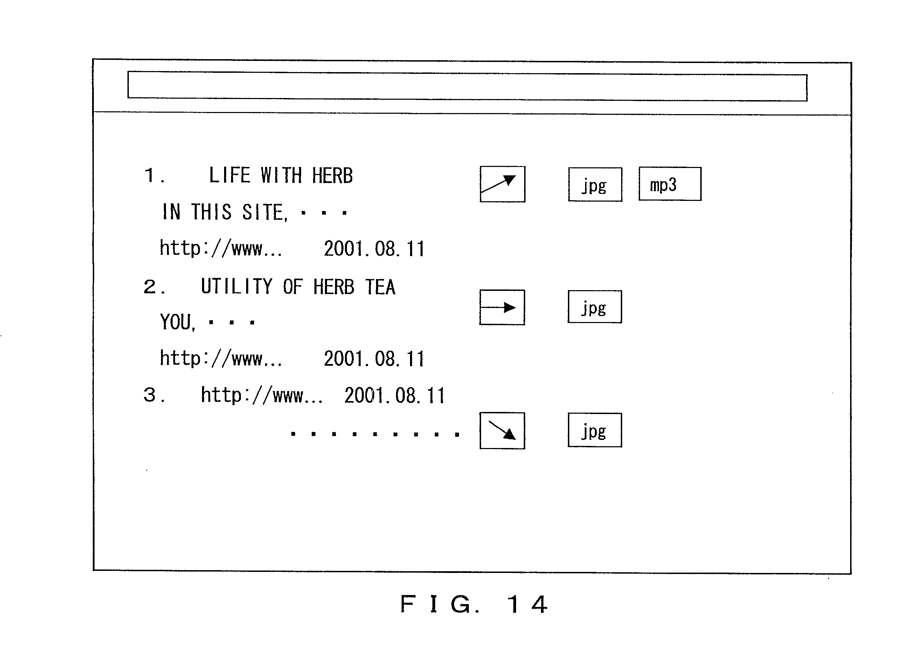

Lastly, the retrieval service unit 107 sorts each document obtained by retrieval according to the popularity degree order and sets the title of each document, information indicating the contents of the document, the document location information about the document, the popularity degree transition icon, the related media icon and the service contents icon on a screen in sorted order. In this way, the display screen of the retrieval result, as shown in Fig. 14, can be generated.

On the display screen of a retrieval result shown in Fig. 14, each document is sorted in descending order according to the latest popularity, that is, in descending order of a static popularity degree. A user can determine how the popularity degree of each document has changed to cause this order, by a popularity degree transition icon. Furthermore, a user can determine to what non-text document each document is linked (includes), by a related media icon. By further selecting (for example, by clicking or touching) the related media icon, the related non-text contents can be reproduced or browsed. Therefore, a user can determine to what non-text contents each document is linked (includes), without browsing the document.

Furthermore, a user can determine what service each document provides, by a service contents icon.

In Fig. 14, if a user selects (for example, by clicking or touching) a popularity degree transition icon, the retrieval service unit 107 obtains the popularity degrees or a plurality of popularity degree orders of the document whose popularity degree transition icon is selected, that are calculated during a specific period, for example, several months from the popularity degree table 113, and generates a graph of a popularity degree or popularity degree order versus popularity degree calculation date, and displays the graph on a screen.

Fig. 15A shows an example of a popularity degree transition screen on which a graph shows popularity degree order transition against a popularity degree calculation date. In Fig. 15A, horizontal and vertical axes represent a date and popularity degree order, respectively. Although in the graph, figures are described in two lines, one figure at the top and the other at the bottom represent a popularity degree order and a popularity degree, respectively. This graph shows how the popularity degree of the relevant document changes during these several months and corresponds to the visual version of the popularity degree transition table. As shown in Fig. 15A, the popularity degree order of a document specified by a URL, www.aaa rapidly increases in March and becomes stable in and after May.

In Fig. 15A, if a part of the graph is selected, the retrieval service unit 107 obtains link relation information in which a date during an appropriate time period in the vicinity of the selected part is used as a collection date or an update date and the document ID of the document is used as a link destination ID from the link relation table 112. Then, the retrieval service unit 107 generates a list of link source documents linking to the document during the specific time period, based on the obtained link relation information and displays the list on a screen.

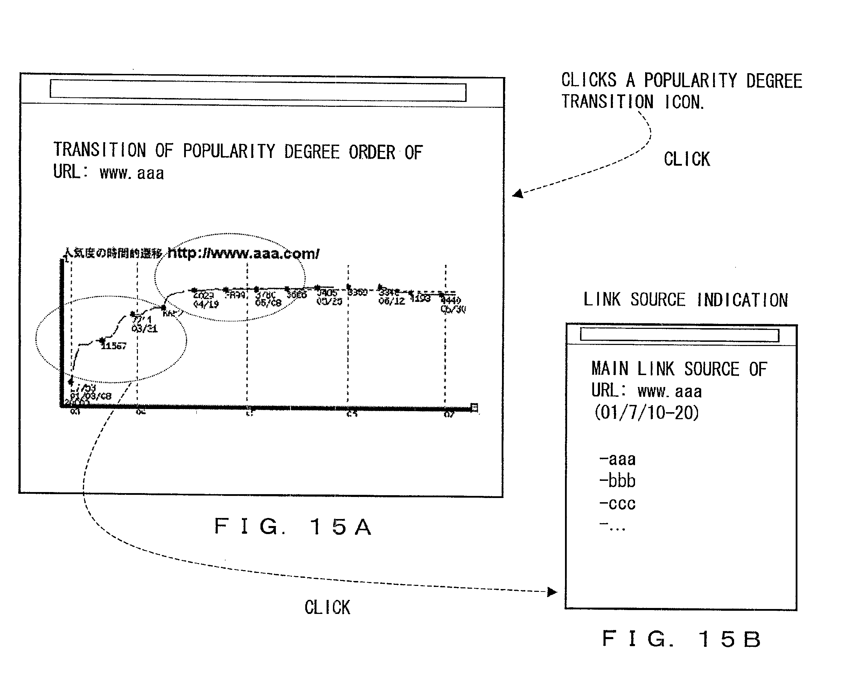

Fig. 15B shows an example of a screen displaying a list of documents linking to a document specified by a URL, www.aaa, that is, a list of the link source documents of a document specified a URL: www.aaa during a specific time period. From Fig. 15B, a user can determine by which document the document is linked to during the time period. For example, if a user is the site master of the document specified by a URL, www.aaa, the user can use this information for future site maintenance.

Furthermore, a user can also register in advance both the document location information about a specific document and the threshold value of a popularity degree in the retrieval service unit 107 and if the popularity degree of the document is beyond or below the threshold value, the retrieval service unit 107 can also notify the user of the fact. In this case, since a user can automatically notified of the popularity degree transition of a document, the user can use this information for future site maintenance and the like.

The document retrieval apparatus of the present invention can also be used for a variety of things other than general retrieval. For example, the document retrieval apparatus 100 can also be used as an industry analysis tool. By displaying the popularity degree transition of a specific industry using the document retrieval apparatus 100, a user can utilize this popularity degree transition for marketing. For that purpose, a user first must prepare a list of the document location information about the top pages (documents) of the corporation in a desired industry (for example, a collection of URLs).

Then, the document retrieval apparatus 100 obtains the latest popularity degree of each document included in the list of document location information from the popularity degree table 113 and creates a popularity degree list displaying a list of the documents in descending order of obtained popularity degrees. This popularity degree list shows the current industry ranking.

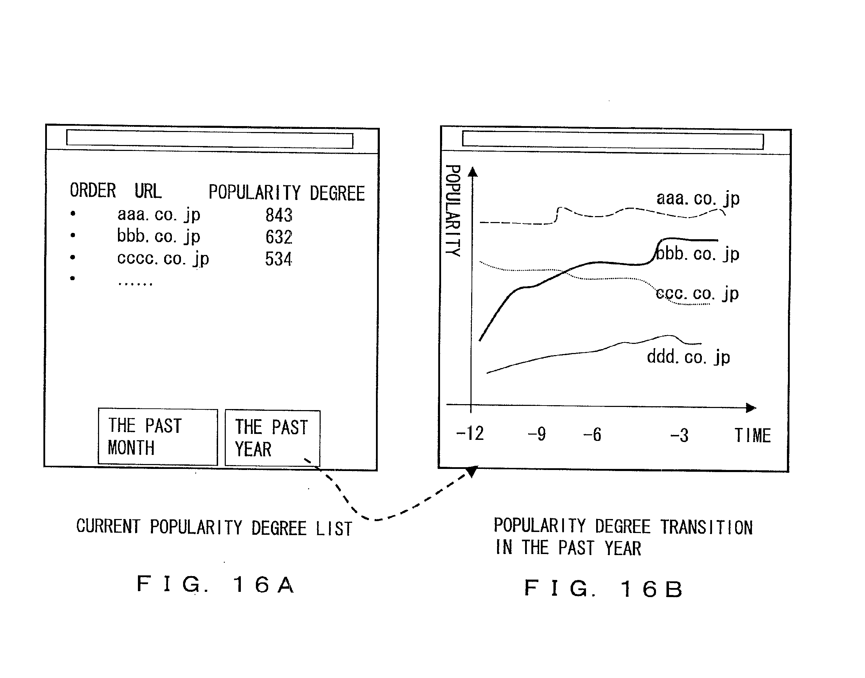

Fig. 16A shows an example of the popularity degree list. At the bottom of Fig. 16A, buttons indicating "the past month" and "the past year" are set. By selecting one of these buttons, the document retrieval apparatus further obtains the popularity degree of each document included in the list of a plurality of pieces of document location information calculated during the past month or year from the popularity degree table 111, generates a graph showing the transition of a popularity degree against a popularity degree calculation date and displays the graph on a screen. The popularity degree order can also be used instead of the popularity degree.

Fig. 16B shows an example of the graph showing the transition of the popularity degree during the past year for each document in a popularity degree list. Fig. 16B shows the transition of the popularity degrees in the past year for each document in the list shown in Fig. 16A and is displayed on the monitor screen of a user by pushing a button indicating "the past year" in Fig. 16A. In Fig. 16B, horizontal and vertical axes represent a population degree calculation date and a popularity degree, respectively. As shown in Fig. 16B, the popularity degree of a document with a URL, bbb.co.jp has rapidly increased during the past year.

For example, the document retrieval apparatus 100 can also be used for a local information retrieval system. For that purpose, first, the page sorting unit 106 generates a hierarchical category indicating a district, such as prefectures, cities, towns and villages and sorts each document according to the category. A user can access a desired document, the popularity degree, the popularity degree transition, related media and services provided by the page by following the hierarchical category.

Fig. 17 shows an example of the screen of a local information retrieval system. Fig. 17A shows an example of a screen displaying a list of documents related to the category "Tokyo". In Fig. 17A, the selected area "Tokyo", each ward of Tokyo and information about each document sorted into "Tokyo" are displayed at the top, middle and bottom, respectively. Since the bottom of the screen is the same as the display screen of a retrieval result shown in Fig. 14, the bottom is omitted in Fig. 17. If a user selects "Minato-ku (ward)" at the top of Fig. 17A, the screen shifts to a screen displaying a list of documents related to the category "Minato-ku (ward)".

Fig. 17B shows an example of a screen displaying a list of documents related to the category "Minato-ku (ward), Tokyo". In Fig. 17B, the selected area "Minato-ku (ward)", the town name in Minato-ku (ward) and information about each document sorted into "Minato-ku (ward), Tokyo" are displayed at the top, middle and bottom, respectively. The bottom of the screen is the same as the display screen of a retrieval result shown in Fig. 14. If a user further selects "Roppongi" at the top of the screen shown in Fig. 17B, the current screen shifts to a screen displaying a list of documents related to the category "Roppongi, Minato-ku (ward), Tokyo".

Fig. 17C shows an example of a screen displaying a list of documents related to the category "Roppongi, Minato-ku (ward), Tokyo". In Fig. 17C, the selectedarea "Roppongi", another category and information about documents sorted into ""Roppongi, Minato-ku (ward), Tokyo" are displayed at the top, middle and bottom, respectively.

Both the document retrieval apparatus 100, terminal set of a user and the like that are described in the preferred embodiments can also be configured using a computer, as shown in Fig. 18. The computer 200 shown in Fig. 18 comprises a CPU 201, a memory 202, an input device 203, an output device 204, an external storage device 205, a medium driving device 206 and a network connecting device 207 and the devices are connected to one another by a bus 208.

For the memory 202, for example, a ROM (Read-Only Memory), a RAM (Random-Access Memory) and the like are used. The memory 202 stores both programs and data that are used for the process. The CPU 201 performs necessary processes by using the memory 202 and executing the program.

To make the computer 200 implement the functions corresponding to those of the document retrieval apparatus 100, the function of each of the collection unit 101, popularity degree calculation unit 102, popularity degree transition calculation unit 103, related non-text contents judgment unit 104, service type judgment unit 105, page sorting unit 106 and retrieval service unit 107 that constitute the document retrieval apparatus 100 shown in Fig. 1 are implemented by a program describing the process of each unit. Each program is stored in[the specific respective program code intercept of]the memory 202. The process performed by each unit is described in each flowchart.

For the input device 203, for example, a keyboard, a pointing device, a touch panel and the like are used. The input device 203 is used for a user to input instructions and information. For the output device 204, for example, a display device, a printer and the like are used. The output device 204 is used to output inquiries, process results and the like to the user of the computer 200.

For the external storage device 205, for example, a magnetic disk device, an optical disk device, a magneto-optical disk device and the like are used. This external storage device 205 can also store both the programs and data described above and can also use the programs and data by loading them into the memory 202, if requested.

The medium driving device 206 drives a portable storage medium 209 and accesses the recorded contents. For the portable storage medium 209, an arbitrary computer-readable storage medium, such as a memory card, a memory stick, a flexible disk, a CD-ROM (Compact-Disk Read-Only Memory), an optical disk, a magneto-optical disk, a DVD (Digital Versatile Disk) and the like are used. The programs and data described above can also be stored in this portable storage medium 209 and can also be used by loading the programs and data, if requested.

The network connecting device 207 communicates with an external device through an arbitrary network (line), such as a LAN, WAN and the like and transmits/receives data accompanying communications. If requested, the network connecting device 207 can also receive the programs and data described above from an external device and can also use the programs and data by loading them into the memory 202.

Fig. 19 shows both computer-readable storage media and transmission signals for providing the computer shown in Fig. 18 with the programs and data.

The computer 200 can also execute the functions corresponding to those of the document retrieval apparatus by providing the computer 200 with both the programs and data stored in each table as follows. For that purpose, the programs and data are stored in advance in the computer-readable storage medium 209. Then, as shown in Fig. 19, it is acceptable to configure the system so that the computer 200 can read both the programs and data from the storage medium 209 using the medium driving device 206, the programs and data can be temporarily stored in the memory 202 of the computer 200 or the external storage device 205 and the CPU 201 of the computer 200 can read and execute these stored programs.

Instead of the computer reading the programs from the storage medium 209, the programs can also be downloaded into the computer from a database (DB) 210 possessed by a program (data) provider through a communications line (network) 211. In this case, for example, a computer with the DB 210, for transmitting the programs converts program data representing the programs into program data signals and obtains transmission signals by modulating the converted program data signals using a modem and outputs the obtained transmission signals to the communications line 211. A computer for receiving the programs obtains the program data signals by demodulating the received transmission signals using a modem and obtains the program data by converting the obtained program data signals.

If the communications line 211 (transmission medium) for connecting a computer on the transmitting side and a computer on the receiving side is a digital line, the program data signals themselves can also be transmitted without modulation. Alternatively, the computer of a telephone office (service provider) can be inserted between a computer with the DB 210, for transmitting the programs and a computer for downloading the programs.

As described above in detail, the present invention calculates a popularity degree for indicating the level of popularity (usage) of a document collected or updated during a first time period and further calculates a popularity transition degree indicating the change over time of the popularity, based on the popularity degree calculated during a second time period. In this way, the problem that the popularity degree of a document always increases and never decreases can be solved and simultaneously information indicating how the popularity degree of the document changes as time elapses can be obtained.

According to the present invention, a variety of documents, such as documents providing non-text contents, documents providing services and the like, can be sorted based on both a link relation between documents and a tag embedded in each document.

While the invention has been described with reference to the preferred embodiments thereof, various modifications and changes may be made by those skilled in the art without departing from the scope of the invention as defined by the claims thereof.

**Claims**

1. A popularity degree calculation method for calculating a popularity degree indicating a level of popularity of a document in a network, comprising:

   extracting a plurality of documents updated or collected during a first time period (S12); and
   calculating the popularity degree for each extracted document (S14).

2. The popularity degree calculation method according to claim 1, wherein the popularity degree is calculated based on both a link relation of each of the extracted documents and document location information indicating a location in the network of each of the documents.

3. The popularity degree calculation method according to claim 2, wherein the popularity degree is calculated based on features of a character string describing the document location information.

4. The popularity degree calculation method according to claim 1, 2, or 3, further comprising:

   calculating a popularity transition degree indicating both a direction and a degree of change in popularity over time of each of the extracted documents (S21 to S23).

5. The popularity degree calculation method according to claim 4, wherein the popularity transition degree is calculated based on a popularity degree calculated during a second time period (S22).

6. The popularity degree calculation method according to claim 5, further comprising:

   calculating a regression equation against a time of the popularity degree calculated during the second time period,

   wherein the popularity transition degree is calculated according to the regression equation (S23).

7. The popularity degree calculation method according to claim 6, wherein the popularity transition degree is calculated based on a regression coefficient of the regression equation (S23).

8. The popularity degree calculation method according to claim 7, further comprising:

   determining the popularity transition degree, based on an intercept of the regression equation.

9. The popularity degree calculation method according to any of claims 4 to 8, further comprising:

   placing the extracted documents in order, based on the popularity degree calculated during the second time period; and

calculating a regression equation against time of the order during the second time period, wherein the popularity transition degree is calculated based on the regression equation.

10. A document relation judgment method for judging a relation between documents in a network, comprising:

extracting a link relation from a first document (S31); and
judging whether a second document linked to by the first document is a non-text document related to contents of the first document, based on the link relation (S32 to S37).

11. The document relation judgment method according to claim 10, further comprising:

extracting a character string located in the vicinity of a part which the first document is linking to the second document, from the first document (S31),

wherein said judging is made based on the character string (S32).

12. The document relation judgment method according to claim 11, wherein if the character string includes a specific character string, it is determined that the second document is the non-text document related to the contents of the first document (S32:Yes).

13. The document relation judgment method according to claim 10, wherein said judging is made based on an extension of a file name of the second document (S33).

14. The document relation judgment method according to claim 13, wherein if the extension is not a specific extension, it is determined that the second document is not the non-text document related to the contents of the first document (S33:No).

15. The document relation judgment method according to claim 10, wherein said judging is made based on whether the second document is used a prescribed number of times or more in the first document (S37).

16. The document relation judgment method according to claim 15, wherein if the second document is used the prescribed number of times or more in the first document, it is determined that the second document is not the non-text document related to the contents of the first document (S37:Yes).

17. The document relation judgment method according to claim 15, wherein if the second document is used less than the prescribed number of times in the first document, it is determined that the second document is the non-text document related to the contents of the first document (S37:No).

18. The document relation judgment method according to any of claims 10 to 17, further comprising:

not registering the second document in a database as the non-text document related to the contents of the first document, if the first document includes a third document with a file name similar to a file name of the second document and if the file name of the second document is ranked lower than the file name of the third document in a dictionary order (S38 and S39).

19. The document relation judgment method according to any of claims 10 to 18, further comprising:

judging, if there is a fourth document linked to by the second document, whether the second document is the non-text document related to the contents of the first document, based on both document location information about the first document indicating location in the network of the document and document location information about the second document (S34 and S35).

20. The document relation judgment method according to claim 19, wherein it is judged whether the second document is the non-text document related to the contents of the first document, based on both the document location information about the first document and document location information about the fourth document (S36).

21. The document relation judgment method according to any of claims 10 to 20, wherein if a fifth document is linked to by the second document and if a server address or a domain in each of document location information about the second document indicating a location in the network of the document and document location information about the fifth document is different from a server address or a domain in document location information about the first document, it is determined that the second document is not the non-text document related to the contents of the first document (S34 to S36).

22. A service type judgment method for judging a type of a service provided by a document in a network, comprising:

    extracting a tag designating user input from the document (S41); and
    judging the type of the service provided by the document, based on the tag designating user input (S42 to S47).

23. The service type judgment method according to claim 22, further comprising:

    determining that the document provides no service, if the document includes no tag designating user input (S41:No).

24. The service type judgment method according to claim 22 or 23, wherein the service type provided by the document is judged based on the description of a button included in the document (S42 and S45).

25. The service type judgment method according to claim 22, 23, or 24, wherein the service type provided by the document is judged based on a user input area included in the document (S44).

26. A program which, when run on a computer, implements the popularity degree calculation method of any of claims 1 to 9.

27. A program which, when run on a computer, implements the document relation judgement method of any of claims 10 to 21.

28. A program which, when run on a computer, implements the service type judgement method of any of claims 22 to 25.

29. A computer-readable storage medium that stores the program of claims 26, 27, or 28.

30. A document retrieval method for searching for a document in a network, comprising:

    collecting documents from the network;
    extracting documents updated or collected during a first time period (S12);
    calculating a popularity degree indicating a level of popularity of each of the extracted documents (S14);
    retrieving documents meeting retrieval conditions from the collected documents, based on the retrieval conditions;
    ranking the retrieved documents, based on the popularity degree; and
    outputting information about the retrieved documents, based on the ranking result.

31. The document retrieval method according to claim 30, further comprising:

    calculating a popularity transition degree for indicating both a direction and a degree of the change in popularity over time of each retrieval document (S21 to S23); and
    adding information about the popularity transition degree to information about the retrieved documents.

32. The document retrieval method according to claim 30, 31, or 32, further comprising:

    for each retrieved document, judging whether another document linked to by the document is a non-text document related to the contents of the document, based on the link relation (S32 to S37); and
    adding the information about the related non-text document to the information about the retrieved documents.

33. The document retrieval method according to claim 32, further comprising:

    embedding the information about the related non-text document into the related non-text document.

**34.** The document retrieval method according to any of claims 30 to 33, further comprising:

extracting a tag designating user input from the document (S41);
judging a type of a service provided by the document, based on the tag designating user input (S42 to S47); and
adding the information about the service type to the information about the retrieved documents.

**35.** The document retrieval method according to any of claims 30 to 34, further comprising:

receiving from a user registration of both document location information indicating the location of a specific document in the network and a value; and
notifying the user of the fact that a popularity degree has reached the value, if the popularity degree for the document specified by the document location information has reached the value.

**36.** A document retrieval apparatus for searching for a document in a network, comprising:

a collection unit (101) collecting documents from the network;
a popularity degree calculation unit (102) extracting documents updated or collected during a first time period as calculation targets of a popularity degree indicating a level of popularity and calculating the popularity degree of each of the extracted documents ; and
a retrieval service unit (107) retrieving a document meeting retrieval conditions from the collected documents, based on the retrieval conditions, ranking the retrieved documents, based on the popularity degree and outputting information about the retrieved documents, based on the ranking result.

**37.** An area information document retrieval apparatus for searching for documents about an area in a network, comprising:

a collection unit (101) collecting documents from the network and extracting a link relation from each of the collected documents;
a popularity degree calculation unit (102) extracting documents updated or collected during a first time period as calculation targets of a popularity degree indicating a level of popularity and calculating the popularity degree of each of the extracted documents;
a popularity degree transition calculation (103) unit calculating a popularity transition degree for indicating both a direction and a degree of change in popularity over time, based on the popularity degree calculated during a second time period;
a related non-text contents judgment unit (104) judging whether a document linked to by each collected document is a non-text document related to the contents of each collected document, based on a link relation between the collected documents;
a service type judgment unit (105) extracting a tag for designating user input from each of the collected documents and judging a type of a service provided by the document, based on the tag for designating user input;
a sorting unit (106) hierarchically sorting the collected documents for each area; and
a retrieval service unit (107) searching for the documents sorted for each of the area names, based on an area name designated by a user, ranking the retrieved documents, based on the popularity degree and outputting information about the popularity transition degree of the retrieved documents, information about the related non-text document and information about a service type provided by the retrieved documents, based on the ranking result, in addition to information about the content of the retrieved documents.

DOCUMENT SORTING APPARATUS 10

LINK RELATION AND TAG

**11**

POPULARITY
DEGREE
CALCULATION
UNIT

**13**

RELATED NON-TEXT
CONTENTS JUDGMENT
UNIT

**14**

SERVICE TYPE
JUDGMENT
UNIT

**12**

POPULARITY
DEGREE
TRANSITION
CALCULATION
UNIT

# F I G. 1

INTERNET · INTRANET, ETC.

DOCUMENT SORTING APPARATUS 100

COLLECTION UNIT

101

111

DOCUMENT TABLE

112

LINK RELATION TABLE

102

POPULARITY DEGREE CALCULATION UNIT

103

POPULARITY DEGREE TRANSITION CALCULATION UNIT

104

RELATED NON-TEXT CONTENTS JUDGMENT UNIT

105

SERVICE TYPE JUDGMENT UNIT

106

PAGE SORTING UNIIT

113

114

115

POPULARITY DEGREE TABLE

POPULARITY DEGREE TRANSITION TABLE

NON-TEXT CONTENTS TABLE

SERVICE TYPE TABLE

116

107

RETRIEVAL SERVICE UNIT

BROWSER

108

USER

F I G.  2

EP 1 302 868 A2

25

DOCUMENT TABLE 111

| URL | ID |
|---|---|
| http://aaa.co.jp/ | 123 |
| http://bbb.co.jp/dd/ | 124 |
| ..... | .... |
| ..... | ..... |

F I G. 3

EP 1 302 868 A2

LINK RELATION TABLE 112

| COLLECTION DATE | UPDATE DATE | LINK SOURCE ID | LINK DESTINATION ID STRING |
|---|---|---|---|
| 010810 | 010725 | 123 | 124, 128, 3150, 3630, ....... |
| 010810 | 010620 | 124 | 256, 975, 1225, ..... |
| .... | ..... | ...... | ....... |

F I G. 4

POPULARITY DEGREE TABLE 113

| CALCULATION DATE | DOCUMENT ID | POPULARITY DEGREE | POPULARITY DEGREE ORDER |
|---|---|---|---|
| 010820 | 123 | 5036 | 346 |
| 010820 | 124 | 83645 | 5890 |
| ..... | ...... | ...... | ..... |

F I G. 5

POPURAITY DEGREE TRNSITION TABLE 114

| DOCUMENT ID | POPULARITY DEGREE | | POPULARITY DEGREE ORDER | |
|---|---|---|---|---|
| | REGRESSION COEFFICIENT | INTERCEPT | REGRESSION COEFFICIENT | INTERCEPT |
| 123 | −12 | 346 | −6 | 233 |
| 124 | −562 | 5890 | −152 | 851 |
| ..... . | ...... | ...... | | ..... . |

F I G. 6

EP 1 302 868 A2

NO-TEXT CONTENTS TABLE 115

| DOCUMENT ID | RELATED NON-TEXT CONTENTS ID | TYPE |
|---|---|---|
| 123 | 3630 | mv |
| 123 | 3150 | snd |
| .... | .... | .... |

F I G. 7

SERVICE TYPE TABLE 116

| DOCUMENT ID | SERVICE TYPE |
|---|---|
| 124 | SEARCH |
| 123 | SHOP |
|  |  |

F I G. 8

EP 1 302 868 A2

POPULARITY DEGREE
CALCULATION PROCESS

d1=TARGET DATE
d2=N-th DAY BEFORE
THE TARGET DATE

STEP S11

EXTRACTS DOCUMENTS, THE
COLLECTION DATE OF EACH OF
WHICH IS BETWEEN d1 AND d2,
FROM THE LINK RELATION TABLE

STEP S12

ELIMINATES OTHER RECORDS
WITH THE SAME LINK SOURCE ID,
EXCEPT THE LATEST RECORD

STEP S13

CALCULATES THE POPULARITY
DEGREE

STEP S14

SORTS DOCUMENTS IN
DESCENDING ORDER OF
POPULARITY DEGREE
(CALCULATES POPULARITY
DEGREE ORDER)

STEP S15

ADDS THE RECORD TO THE
POPULARITY DEGREE TABLE

STEP S16

END

F I G. 9

SIMPLY LOCATES POPULARITY DEGREES IN A TIME SERIES:
BASICALLY A POPULARITY DEGREE MONOTONOUSLY INCREASES
AS TIME ELAPSES (HOW THE POPULARITY DEGREE CHANGES
AS TIME ELAPSES IS UNKNOWN).

POPULARITY
DEGREE

**F I G. 1 0 A**

TIME

SOLUTION (2)
LOCATES A POPULARITY DEGREE ORDER IN A TIME SERIES:
POPULARITY DEGREE ORDER TYPICALLY BECOMES EVEN AS
TIME ELAPSES.

POPULARITY
DEGREE
ORDER
(RANKING)

INCREASING
PERIOD

STABLE PERIOD

DECREASING
PERIOD

**F I G. 1 0 C**

TIME

SOLUTION (1)
CALCULATES A POPULARITY DEGREE DURING
A SPECIFIC TIME PERIOD:
IF THE POPULARITY IS TEMPORARY, THE POPULARITY
DEGREE DECREASES AS TIME ELAPSES.

POPULARITY
DEGREE

TEMPORARY

TIME

CALCULATION
STARTING
DATE

POPULARITY DEGREE
CALCULATION DATE

**F I G. 1 0 B**

POPULARITY DEGREE
CALCULATION PROCESS

d1=TARGET DATE
d3=M-th DAY BEFORE TARGET DATE — STEP S21

EXTRACTS POPULARITY DEGREES OR
POPULARITY DEGREE ORDER
(RANKING) CALCULATED BETWEEN
d1 AND d3 FROM THE POPULARITY
DEGREE TABLE FOR EACH DOCUMENT — STEP S22

CALCULATES A LINEAR REGRESSION
EQUATION FOR EACH DOCUMENT(*)
r=a(d1-d3)+b — STEP S23

STORES BOTH a AND b IN THE
POPULARITY DEGREE TABLE — STEP S24

END

*IF POPULARITY DEGREES (OR POPULARITY DEGREE ORDER (RANKING)) OF d3, d3+1, ...,
d1(M DAYS) ARE ASSUMED TO BE $W_0$, $W_1$, ..., $W_{M-1}$ RESPECTIVELY, THE FOLLOW EQUATIONS
HOLD TRUE.
a=(Mx1w-1xW)/(Mx12-1$^2$)
b=(1x1w-Wx12)/(1$^2$-Mx12)

$$Iw = \sum_{i=0}^{M-1} i * w_i \quad , \qquad W = \sum_{i=0}^{M-1} w_i \quad , \qquad I = \sum_{i=0}^{M-1} i \quad , \qquad I2 = \sum_{i=0}^{M-1} i^2$$

# F I G. 1 1

```
          ╭──────────────────────────╮
          │  RELATED NON-TEXT CONTENTS │
          │     JUDGMENT PROCESS       │
          ╰──────────────────────────╯
                      │
                      ▼
          ┌──────────────────────────┐
          │ S: LINK SOURCE DOCUMENT  │          STEP S31
          │ C: JUDGMENT TARGET DOCUMENT │
          │ A: LINK CHARACTER STRING │
          └──────────────────────────┘
                      │
                      ▼                          STEP S32
          ⬡ A: A SPECIFIC CHARACTER ⬡
          ⬡        STRING?          ⬡
                      │ NO
                      ▼                          STEP S33
          ⬡  C: TARGET EXTENSION?  ⬡ ──── NO
                      │ YES
                      ▼        STEP S34                 STEP S35
          ⬡  C: USED AS A LINK?  ⬡ ── YES ─▶ ⬡ SITE OF C = SITE OF LINK ⬡
                      │ NO                      ⬡      SOURCE S?          ⬡
                                    ── YES ──────────┘
                                                       │ NO
                   STEP S36                            ▼
          ⬡ SITE OF LINK DESTINATION ⬡ ── NO
          ⬡  OF C = SITE OF LINK     ⬡
          ⬡       SOURCE S?          ⬡
                      │ YES
      STEP S37        ▼
          ⬡ IS C USED THREE TIMES OR ⬡ ── YES
          ⬡  MORE IN DOCUMENT S?     ⬡
                      │ NO              STEP S38                        STEP S39
          ⬡ DOES DOCUMENT S INCLUDE ⬡             ⬡ IS THE FILE NAME OF THE  ⬡ ── NO
          ⬡ OTHER DOCUMENTS WITH FILE ⬡ ── YES ─▶ ⬡ DOCUMENT C OF ALL THE   ⬡
          ⬡ NAMES SIMILAR TO THAT OF ⬡            ⬡ DOCUMENTS, EACH WITH A   ⬡
          ⬡          C?              ⬡            ⬡ SIMILAR FILE NAME, RANKED AT ⬡
                      │ NO                        ⬡ THE TOP IN DICTIONARY ORDER? ⬡
                                    ── YES ──────────┘
                      ▼
          ┌──────────────────────────┐
          │ C: ADDS THE DOCUMENT TO THE │      STEP S40
          │ NON-TEXT CONTENTS TABLE  │
          └──────────────────────────┘
                      │
                      ▼
               ╭──────────╮
               │   END    │
               ╰──────────╯
```

SERVICE TYPE JUDGMENT
PROCESS

IS THERE A FORM TAG? — STEP S41

YES

DOES THE BUTTON INCLUDE
THE WORD "PURCHASE",
"BUY" OR THE LIKE? — STEP S42 —YES→ SERVICE TYPE=SHOP — STEP S43

NO

IS THERE A USER INPUT
AREA? — STEP S44

←NO

YES

DOES THE BUTTON INCLUDE
THE WORD "SEARCH" OR THE
LIKE? — STEP S45 —YES→ SERVICE TYPE=SEARCH — STEP S46

NO

SERVICE TYPE=APPLY — STEP S47

NO

ADDS THE SERVICE TYPE TO THE
SERVICE TYPE TABLE — STEP S48

END

F I G. 1 3

EP 1 302 868 A2

1.   LIFE WITH HERB
   IN THIS SITE, ・・・
   http://www...    2001. 08. 11

2.   UTILITY OF HERB TEA
   YOU, ・・・
   http://www...    2001. 08. 11

3.   http://www... 2001. 08. 11
        ・・・・・・・・・・

jpg    mp3

jpg

jpg

F I G.  1 4

CLICKS A POPULARITY DEGREE
TRANSITION ICON.

CLICK

TRANSITION OF POPULARITY DEGREE ORDER OF
URL: www. aaa

人気度の時間的遷移 http://www.aaa.com/

2023
(4/19)
7F99
378C
06/C8
36E6
9405
03/25
9360
334
06/12
1199
4440
06/30

77 1
03/31

642

11567

1/03
01/03/C8
2/05

01    0c    1r    c5    07

F I G. 1 5 A

CLICK

LINK SOURCE INDICATION

MAIN LINK SOURCE OF
URL: www. aaa
(01/7/10-20)

-aaa
-bbb
-ccc
-...

F I G. 1 5 B

EP 1 302 868 A2

ORDER  URL        POPULARITY DEGREE
- aaa. co. jp        843
- bbb. co. jp        632
- cccc. co. jp       534
- ......

| THE PAST MONTH | THE PAST YEAR |

CURRENT POPULARITY DEGREE LIST

FIG. 16A

POPULARITY

aaa. co. jp

bbb. co. jp

ccc. co. jp

ddd. co. jp

-12    -9    -6    -3    TIME

POPULARITY DEGREE TRANSITION
IN THE PAST YEAR

FIG. 16B

EP 1 302 868 A2

"TOKYO"

CHIYODA-KU, MINATO-KU
CHUO-KU .....

(URL LIST)

F I G. 1 7 A

"MINATO-KU"

ROPPONGI, SHIBA
...

(URL LIST)

F I G. 1 7 B.

"ROPPONGI"

RESTAURANT, HALL
.....

1. TTTTTTT [mv]
   IN THIS SITE, .....
   http://www..... 2001. 8. 10

2. .........

F I G. 1 7 C

BUS

```
  201
 ┌─────────┐
 │   CPU   │
 └─────────┘
              208
                    205
               ┌──────────────┐
               │   EXTERNAL   │
               │STORAGE DEVICE│
  202          └──────────────┘
 ┌─────────┐
 │ MEMORY  │
 └─────────┘    206              209
               ┌──────────────┐ ┌──────────────┐
               │MEDIUM DRIVING│←│   PORTABLE   │
               │   DEVICE     │ │STORAGE MEDIUM│
  203          └──────────────┘ └──────────────┘
 ┌─────────────┐
 │INPUT DEVICE │
 └─────────────┘
                207
               ┌──────────────┐
               │   NETWORK    │
               │  CONNECTING  │←→  NETWORK
  204          │   DEVICE     │
 ┌─────────┐   └──────────────┘
 │ OUTPUT  │
 │ DEVICE  │
 └─────────┘
```

COMPUTER 200

F I G.   1 8

PROGRAM (DATA)
PROVIDER — 210

PROCESSING
DEVICE — 200

MEMORY, SUCH AS
RAM/HARD DISK, ETC.

LINE
211

PROGRAMS
(DATA)

PROGRAMS
(DATA)

TO LOAD

206

202

205

PROGRAMS (DATA)

CD-ROM, FLEXIBLE DISK,
ETC.

F I G. 1 9